# EUROPEAN PATENT APPLICATION

(11) **EP 1 388 823 A2**
(43) Date of publication of application: **11.02.2004**
(21) Application number: 03018159.8
(22) Date of filing: 08.08.2003
(51) Int. Cl.: G07F 7/00, G07F 17/16

(54) **Communication terminal and information processing apparatus of a payment system**

(30) Priority: 09.08.2002 JP 2002232404; 27.06.2003 JP 2003185657
(71) Applicant: MATSUSHITA ELECTRIC INDUSTRIAL CO., LTD., Kadoma-shi, Osaka 571-8501 (JP)
(72) Inventor: Nakamitsu, Hiroaki, Fujisawa-shi, Kanagawa 251-0002 (JP); Ito, Hayashi, Matsudo-shi, Chiba 270-2221 (JP); Matsuura, Shun, Suginami-Ku, Tokyo 166-0014 (JP)
(74) Representative: Betten & Resch

(57) **Abstract**

A communication terminal automatically providing environmental information and making various functional services of terminal concerned usable by acquired remuneration information according to the information provided, an information processing apparatus evaluating information provided from the terminal and determining remuneration information according to the information value. Communication terminal measures the environment by a sensor at predetermined times and transmits the environmental data with authentication data stored in a memory card to an information processing apparatus, after that the information processing apparatus transmits remuneration information calculated according to the environmental data to the communication terminal apparatus transmitting the data, the communication terminal receiving the remuneration information provides functional service of itself to the users of communication terminal according to remuneration information, so that the users become able to use various functions of communication terminal concerned without bothersome operations and the information processing apparatus is able to acquire environmental data easily.

## Description

### BACKGROUND OF THE INVENTION

### Field of the Invention

The present invention is a payment system giving remuneration information to a communication terminal as an information provider according to information provided by information processing apparatus. Particularly the present invention relates to a payment system acquiring environmental information.

### Description of the Related Art

Japan Patent Laid Open No. 2002-63286 discloses a prior art payment system existed.

In fig. 19 of this reference, the conventional payment system comprises a terminal 1901 enabling a user to input and display information directly; information storage distribution apparatus 1902 processes for searching, updating, adding and deleting data based on instructions of a distributor; data processing apparatus 1903 permanently storing various data into files/database etc., and value returning apparatus 1904 comprising means for returning benefits directly to the information provider.

However, the information provider needs to input information to the terminal 1901 directly and manually and transmit it manually, which is inconvenient.

### SUMMARY OF THE INVENTION

The present invention solves the above deficiency, and it is an object of the present invention to provide the environmental information from the terminal automatically and transparently to the user, to provide a terminal wherein various service functions in itself become usable according to acquired remuneration information, and the information processing apparatus evaluating information provided from the terminal and determining remuneration according to the information.

The terminal of the present invention comprises objective information acquisition means acquiring objective information, objective information transmission means transmitting objective information at arbitrary or predetermined times, and remuneration information reception means receiving remuneration information related to remuneration for the transmitted objective information.

Thereby it becomes possible for users to acquire remuneration with ease because the terminal measures objective information such as the environmental information etc. and automatically transmits it, so that various functions in the terminal become usable.

In a still another aspect of the present invention is the information processing apparatus comprising objective information reception means; remuneration calculation means responsible to the objective information; and remuneration information transmission means.

Thereby, for example, the service provider managing the information processing apparatus is able to easily acquire environmental data in various regions without setting measurement devices for the environment of various regions because the information processing apparatus receives objective information such as environmental data etc. from each terminal and automatically gives remuneration.

### BRIEF DESCRIPTION OF THE DRAWINGS

- Fig. 1: is a block diagram of the configuration of the payment system in the first embodiment of the present invention,
- Fig. 2: is a block diagram of the hardware of the control apparatus in the communication apparatus in the first embodiment of the present invention,
- Fig. 3: is a functional block diagram of the control apparatus in the communication apparatus in the first embodiment of the present invention,
- Fig. 4: is a flowchart of the operation of transmission to the center and acquisition of environmental data in the first embodiment of the present invention,
- Fig. 5: is a flowchart of the operation of the reception of remuneration from the center and the process according to user's request,
- Fig. 6: is a block diagram of data such as environmental data processed in the communication terminal in the first embodiment of the present invention,
- Fig. 7: is a correlation diagram of the service function and usage rights provided by the communication terminal and in the first embodiment of the present invention,
- Fig. 8A: is a data block diagram of usage rights saved in memory card for the communication terminal in the first embodiment of the present invention,
- Fig. 8B: is a data block diagram of usage rights saved in memory card for the communication terminal in the first embodiment of the present invention,
- Fig. 9: is a functional block diagram of the center in the first embodiment of the present invention,
- Fig. 10: is a flowchart of the operation of the center in the first embodiment of the present invention,
- Fig. 11: is a diagram of the calculation rule of remuneration in the center in the first embodiment of the present invention,
- Fig. 12: is a block diagram of the payment system in the second embodiment of the present invention,
- Fig. 13: is a block diagram of the hardware of the control apparatus in the communication terminal in the second embodiment of the present invention,
- Fig. 14: is a functional block diagram of the control apparatus in the communication terminal in the third embodiment of the present invention,
- Fig. 15: is a flowchart of the operation of the acquisition of environmental data and its transmission to the center in the third embodiment of the present invention,
- Fig. 16: is a flowchart of the operation of the communication terminal in the third embodiment of the present invention,
- Fig. 17: is a flowchart of the operation of the center in the third embodiment of the present invention,
- Fig. 18: is a remuneration expectation list in the third embodiment of the present invention,
- Fig. 19: is a block diagram of the configuration of the conventional payment system,
- Fig. 20: is a sequential diagram of transmission and reception in the fourth embodiment of the present invention,
- Fig. 21: is a functional block diagram of the information processing apparatus related to the fourth embodiment of the present invention,
- Fig. 22: is a functional block diagram of the information processing apparatus related to the fourth embodiment of the present invention,
- Fig. 23: is a diagram of the correspondence of objective information provider ID and the information attribute information in the form of a table,
- Fig. 24: is a flowchart of the process of the information processing apparatus related to the fourth embodiment of the present invention,
- Fig. 25: is a flowchart demonstrating the process of the information processing apparatus related to the fourth embodiment of the present invention,
- Fig. 26: is a functional block diagram of the information processing apparatus related to the fifth embodiment of the present invention,
- Fig. 27: is a flowchart of the process of the information processing apparatus related to the fifth embodiment of the present invention,
- Fig. 28: is a functional block diagram of the information processing apparatus related to the seventh embodiment of the present invention,
- Fig. 29: is a functional block diagram of the information processing apparatus related to the eighth embodiment of the present invention,
- Fig. 30: is a functional block diagram of the information processing apparatus related to the ninth embodiment of the present invention,
- Fig. 31: is a functional block diagram of the communication terminal related to the tenth embodiment of the present invention,
- Fig. 32: is a concrete functional block diagram of the communication terminal related to the tenth embodiment of the present invention,
- Fig. 33: is a flowchart of the process of the communication terminal related to the tenth embodiment of the present invention,
- Fig. 34: is a functional block diagram of the communication terminal related to the eleventh embodiment of the present invention,
- Fig. 35: is a functional block diagram of the communication terminal related to the twelfth embodiment of the present invention,
- Fig. 36: is sequential diagram of the transmission and reception between the communication terminal and the information processing apparatus related to the thirteenth embodiment of the present invention,
- Fig. 37: is a functional block diagram of the communication terminal related to the thirteenth embodiment of the present invention,
- Fig. 38: is a diagram of an example of a display for acquiring related information,
- Fig. 39: is a diagram of an example of remuneration expectation information request information to be generated,
- Fig. 40: is a flowchart of the process of the communication terminal related to the thirteenth embodiment of the present invention,
- Fig. 41: is a functional block diagram of the information processing apparatus related to the thirteenth embodiment of the present invention,
- Fig. 42: is a flowchart of the process of the information processing apparatus related to the thirteenth embodiment of the present invention,
- Fig. 43: is a functional block diagram of the communication terminal related to the fourteenth embodiment of the present invention,
- Fig. 44: is a diagram illustrating an example of schedule information,
- Fig. 45: is a functional block diagram of the communication terminal related to the fifteenth embodiment of the present invention,
- Fig. 46: is a functional block diagram of the communication terminal related to the sixteenth embodiment of the present invention,
- Fig. 47: is a diagram of an example of the remuneration expectation information to be stored,
- Fig. 48: is a functional block diagram of the communication terminal related to the seventeenth embodiment of the present invention,
- Fig. 49: is a flowchart of the process of the communication terminal related to the seventeenth embodiment of the present invention,
- Fig. 50: is a diagram of an example of the remuneration expectation information.

### DETAILED DESCRIPTION OF THE PREFERRED EMBODIMENTS

Hereinafter, the embodiments of the present invention will be described with the use of drawings.

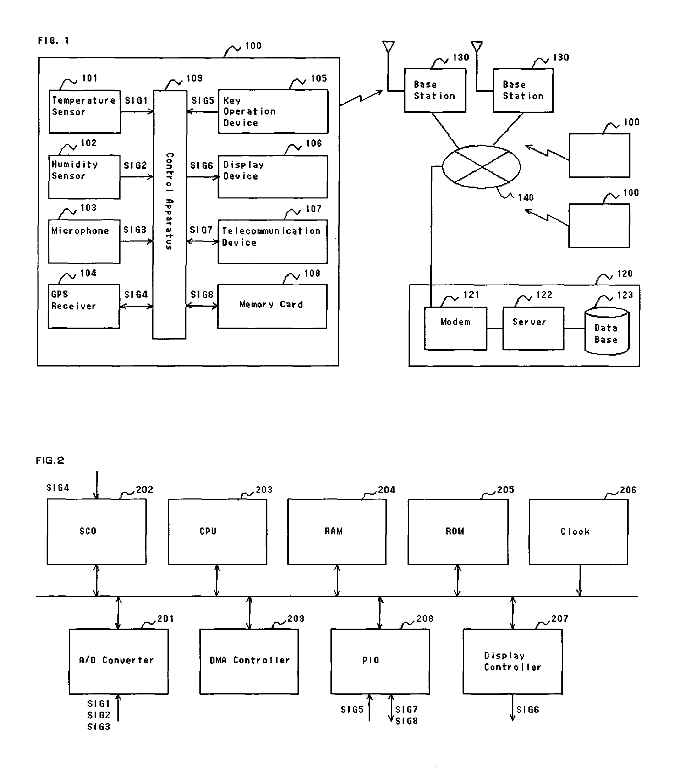

Fig. 1 is a block diagram of the configuration of the payment system in the embodiment of the present invention.

As shown in Fig. 1, the payment system of the present invention comprises multiple communication terminals 100, center 120, multiple base stations 130, and the networks 140 which typically use telecommunication methods.

In this payment system, environmental information is transmitted from the communication terminal 100 to the base station 130 through wireless telecommunication. Then environmental information is transmitted from the base station to center 120 through the network 140. Then remuneration information, according to value of received environmental information, is transmitted from center 120 to the communication terminal 100 as an information provider through the network 140 and base station 130.

Hereinafter, communication terminal 100 and center 120, comprising the payment system in the first embodiment of the present invention, will be described in detail.

Communication terminal 100 comprises a temperature sensor 101, humidity sensor 102, microphone 103, GPS receiver 104, key operation device 105, display device 106, telecommunication device 107, memory card 108, and control apparatus 109.

Temperature sensor 101 such as a thermistor, humidity sensor 102 such as a ceramic humidity sensor, and microphone 103 detect environmental information around the communication terminal. Additionally, sensors detecting pollen and smoke etc. in the atmosphere are provided. The information regarding temperature, humidity, noise, pollen level, and smoke level etc. corresponds to objective information and is referred to as "environmental data" hereinafter. Note that the objective information corresponds to information which is uncontrollable by the communication terminal providing information and to information which is unsusceptible to subjectivity of provider information as a user of the communication terminal, and so on.

GPS receiver 104 can detect a two-dimensional or three-dimensional position of communication terminal 100 by measuring the distance between communication terminal 100 and more than three satellites as is known to those skilled in the art. Positional information measured by this GPS receiver is referred to as "current position data" hereinafter.

Key operation device 105 inputs instructions from a user into control apparatus 109 and is used for instructing display of reception data and setting a standard for determination of remuneration.

Display device 106 is a liquid crystal panel displaying current position and received data.

Telecommunication device 107 communicates two-way between communication terminal 100 and center 120.

Memory card 108 typically corresponds to an SD card and smart media etc. storing the right to use various service functions in the communication terminal and the authentication code for identifying the user. This right to use is stored in advance or received as remuneration information from center 120.

Control apparatus 109 instructs environmental data and current position data to be transmitted to center 120 at a predetermined time. Furthermore, it stores remuneration information received from center 120 in memory card 108 and processes for instructing display of received data, executing registered application software, and controlling telephone functions.

In addition, Fig. 2 is a block diagram showing an example of the hardware configuration of control apparatus 109. Note that the same signal and configuration element are used synonymously hereinafter.

In Fig. 2, control apparatus 109 comprises temperature sensor 101, humidity sensor 102, A/D converter 201 converting analog signal SIG1, SIG2 and SIG3 from microphone 103 to digital signals, serial converter (SCO) 202 transmitting serial signal SIG4 from GPS receiver 104 to bus data line, RAM 204 for memory used for executing data processing, ROM 205 storing data such as processing program and authentication data etc., data SIG105 from key operation device 105, parallel IO port (PIO) 208 synchronizing data SIG8 from memory card 108 and transmission-reception data SIG7 from communication terminal 107 with bus clock and inputting-outputting them, DMA controller 209 transmitting data at a high-speed between RAM 204 and memory card 108, display controller 207 controlling display data SIG6 of display apparatus 106, and clock 206 generating reference clock signal. They are connected by a bus connection and controlled by CPU 203.

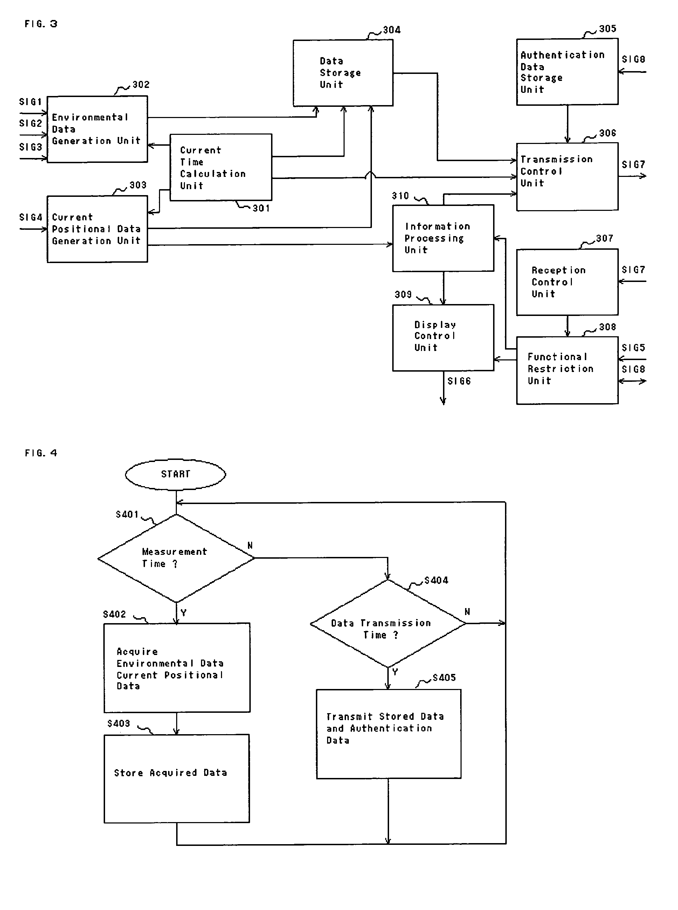

A functional block configuration of control apparatus 109 implemented by the above-mentioned hardware configuration will be described with the use of Fig. 3.

Current time calculation unit 301 calculates current time by the output of clock 206 and transmits it to environmental data generation unit 302, current positional data generation unit 303, and transmission control unit 306.

Environmental data generation unit 302 generates environmental data from signal SIG1 from temperature sensor 101, signal SIG2 from humidity sensor 102, and signal SIG3 from microphone 103. This environmental data generation unit 302 and various sensors constitute objective information acquisition means.

Current positional data generation unit 303 generates latitudinal and longitudinal data, referred to as current positional data, from signal SIG4 from GPS receiver 104. This GPS receiver 104 and current position data generation unit 303 comprise current position detection means.

Data storage unit 304 stores this environmental data and current positional data, related to current time informed from current time calculation unit 301, in RAM 204. This data storage unit 304 and RAM 204 comprise data storage means.

Authentication data storage unit 305 converts user's authentication code stored in memory card 108 to signal SIG8, then reads and stores in it RAM 204.

Transmission control unit 306 outputs environmental data stored in data storage unit 108, current positional data, and authentication data stored in memory card 108 to telecommunication device 107 at the instruction of current time calculation unit 301. This transmission control unit 306 and telecommunication device 107 constitute objective information transmission means.

Reception control unit 307 receives remuneration information transmitted from center 120 and data for providing various services from telecommunication device 107 and outputs it to functional restriction unit 308. This reception control unit 307 and telecommunication device 107 comprise remuneration information reception means.

Functional restriction unit 308 writes and updates remuneration information input from reception control unit 307 on memory card 108 and reads it from memory card 108. In addition, provision of various service functions in return for user's request signal SIG5 is restricted according to the remuneration information. This functional restriction unit 308 constitutes functional restriction means.

Display control apparatus 309 converts input data to picture signal SIG6 and outputs it to display device 106 at the instruction of functional restriction unit 308 and information processing unit 310.

Information processing unit 310 executes input data on specific application software and outputs it to display device 106 through display control apparatus 309 at the instruction of functional restriction unit 308.

Operation of communication terminal 100, having configuration suchlike, will be described with the use of the flowchart of Fig. 4 and Fig. 5.

Fig. 4 demonstrates the operation for acquisition of environmental data and its transmission to center 120, and Fig. 5 demonstrates the operation for reception of remuneration information from center 120 and processes user's request.

In Fig. 4, firstly, current time calculation unit 301 checks whether current time is a predetermined measurement time (step S401). If so, it instructs environmental data generation unit 302 and current positional data generation unit 303 to measure, so that environmental data generation unit 302 will measure the temperature, humidity, and noise with temperature sensor 101, humidity sensor 102, and microphone 103 respectively, then generates environmental data. Moreover, current positional data generation unit 303 calculates current positional data in reference to signal SIG4 from GPS receiver 104 (step S402).

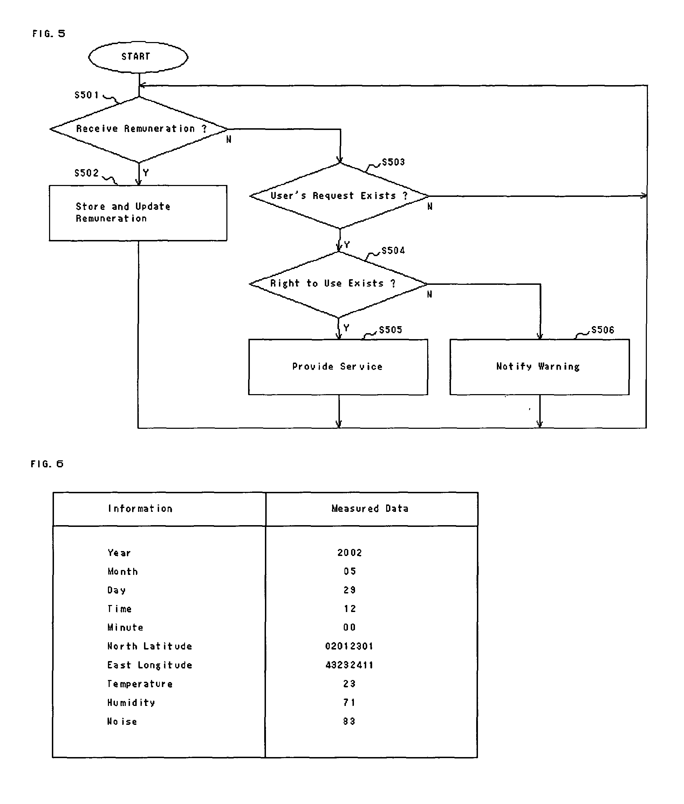

Secondly, data storage unit 304 stores environmental data and current positional data generated in step S402 related to current time information acquired from current time calculation unit 301 to RAM 204 (step S403). After that, it returns to step S401. Fig. 6 illustrates data configuration such as environmental data etc. stored in RAM 204 at this point. Environmental data etc. having this data configuration is stored every predetermined time.

However, in cases where it is not a measurement of time in step S401, current time calculation unit 301 checks whether it is time to transmit environmental data etc. to center 120 (step S404), and that in cases where the current time is not the predetermined transmission time of data, it returns to step S401.

In cases where current time is transmission time of data, transmission control unit 306 outputs user's authentication code acquired from authentication data storage unit 305 with environmental data etc. stored in data storage unit 304 to telecommunication device 107 (step S405). Telecommunication device 107 transmits data SIG7 from transmission control unit 306 to center 120.

Processes described hereinabove are related to the storage of environmental data and the operation of transmission to center 120. Note that it becomes possible to reduce electrical consumption of communication terminal 100 by transmitting data to center 120 at the same time in this way. Moreover, it is able to change whether user transmits environmental data etc. to center 120, by changing settings and by transmitting it from key operation device 105 to transmission control unit 306. In this case, it becomes possible to reduce transmission to center 120, thereby further reducing electricity consumption of communication terminal 100.

Moreover, it is able to stop measuring environmental data in cases where user stays underground and user's current position cannot be detected by GPS receiver 104. Thereby it becomes possible to prevent measuring and storing useless environmental data, so that unnecessary electricity consumption is avoided.

Moreover, in the present embodiment, environmental data etc. are stored once received by data storage unit 304 and transmitted to server 120 at a predetermined time. Thereby it becomes possible to simultaneously transmit large volumes of stored data while communication lines have low traffic, such as nighttime, so as to avoid congestion. It is preferable to use non-volatile RAM for storing environmental data etc. when communication terminal 100 is shut off.

Moreover, this data storage unit 304 is not necessarily the configuration element. Therefore, environmental data etc. may be transmitted to center 120 when they are acquired at predetermined measurement time, thereby making it possible to downsize the RAM of communication terminal 100 because storage area in data storage unit 304 becomes unnecessary.

The operation of the reception for remuneration information from center 120 and the process of user's request will be described with the use of Fig. 5.

In Fig. 5, reception control unit 307 checks whether telecommunication device 107 has received remuneration information from center 120 (step S501). If so, it transmits notification to functional restriction unit 308.

In cases where functional restriction unit 308 receives this notification, it writes remuneration information on memory card 108. In this case, if remuneration information is registered as right to use for communication terminal 100, the usage right will be updated according to remuneration information.

Hereinafter, the above-mentioned processes will be described.

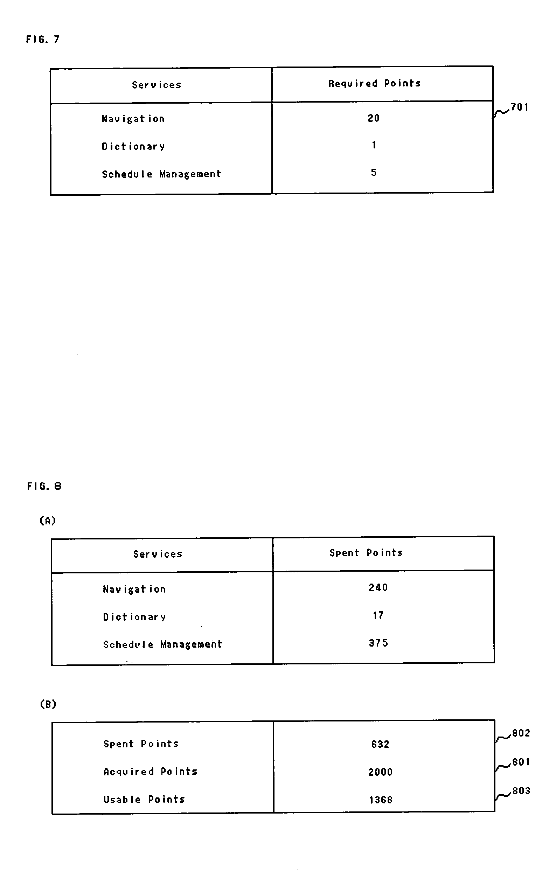

Fig. 7 shows service functions provided by communication terminal 100 as well as a one-time right to use for service function. This information is acquired from center 120 in advance. Functional restriction unit 308 subtracts points from acquired points as remuneration.

Fig. 8A and Fig. 8B show data configuration of the usage right data stored in memory card 108. Fig. 8A shows data configuration of accumulated points used for each functional service and Fig. 8B shows the data configuration of acquired points 801, total spent points 802, and remaining usable points 803. This information is managed in functional restriction unit 308.

Here, in cases where functional restriction unit 308 acquires new remuneration information, it adds remuneration points to acquired points 801 and updates remaining usable points 803 (step S502). After that, it returns to step S501.

However, in cases where remuneration information is not acquired in step S501, functional restriction unit 308 checks whether user's request from key operation device 105 exists (step S503). When user's request doesn't exist, it returns to step S501. When it exists, functional restriction unit 308 calculates required points for service user requested from Fig. 7, and makes sure that the required points don't exceed the usable points 803 in memory card 108 (step S504). In cases where the usable points 803 exceeds the required points, functional restriction unit 308 instructs display control unit 309 and information processing unit 310 to execute service. In cases where usable points don't exceed required points, functional restriction unit 308 instructs display control unit 309 to display warning message such as; "Shortage of usable points" (step S506). After that it returns to step S501.

Next, display control unit 309 and information processing unit 310 process for service requested according to the instruction from functional restriction unit 308 (step S505).

Hereinafter, taking the cases in which the user requests navigational service, for example, will be described.

Functional restriction unit 308 detects that 20 points are required for the navigational service (701). After that, functional restriction unit 308 determines that the provision of navigational service is possible because usable points stored in memory card total 1368 points (step S504).

Next, functional restriction unit 308 instructs information processing unit 310 to execute navigational service to the destination that the user has requested. Information processing unit 310 receives this instruction, acquires current position from current positional data generation unit 303, and requests center 120 to specify a route from the current position to the destination through transmission control unit 306. Transmission control unit 306 transmits this information to information processing unit 310.

Information processing unit 310 composes a route to the destination acquired from center 120 and the current positional mark acquired from current positional data generation unit 303, on the map data acquired from center 120 and requests display control unit 309 to display it on display device 106. Display control unit 309 receives this request, converts it to a picture signal, and outputs it to display device 106 (step S505).

Note that, although the present embodiment describes cases in which a navigation service, displaying navigation transmitted from center 120, provided by communication terminal 100 for example, communication terminal 100 can also provide dictionary functional service and schedule management functional service independently by communication terminal 100 having a dictionary function in its ROM and a calendar function for storing user's schedule in its RAM.

Moreover, functional restriction unit 308 is enabled to restrict usage of various functions at predetermined periods by counting the output from clock 206 according to the acquired points.

Hereinabove, configuration and processes of communication terminal 100 were described.

Thereby it becomes possible for users to acquire remuneration without bothersome operations and to use various functional services of communication terminal 100 because communication terminal 100 automatically measures environmental data etc. at predetermined times and transmits them to center 120.

Moreover, in the present embodiment, authentication data and remuneration information are stored in the memory card as external memory. Thereby it becomes possible to use the service functions of any communication terminal related to the present invention according to the usable points stored in the memory card by detaching the memory card from one of communication terminals 100 and attaching it to another.

Next, configuration of center 120 in the first embodiment of the present invention will be described with the use of Fig. 1.

In Fig. 1, center 120 comprises modem 121 for transmission and reception of data through communication lines, server 122 for processing data of center 120 such as workstations and personal computers, and database 123 for storing data for managing received data and communication terminal 100 such as a large capacity hard disk. Server 122 and database 123 comprise the information processing apparatus.

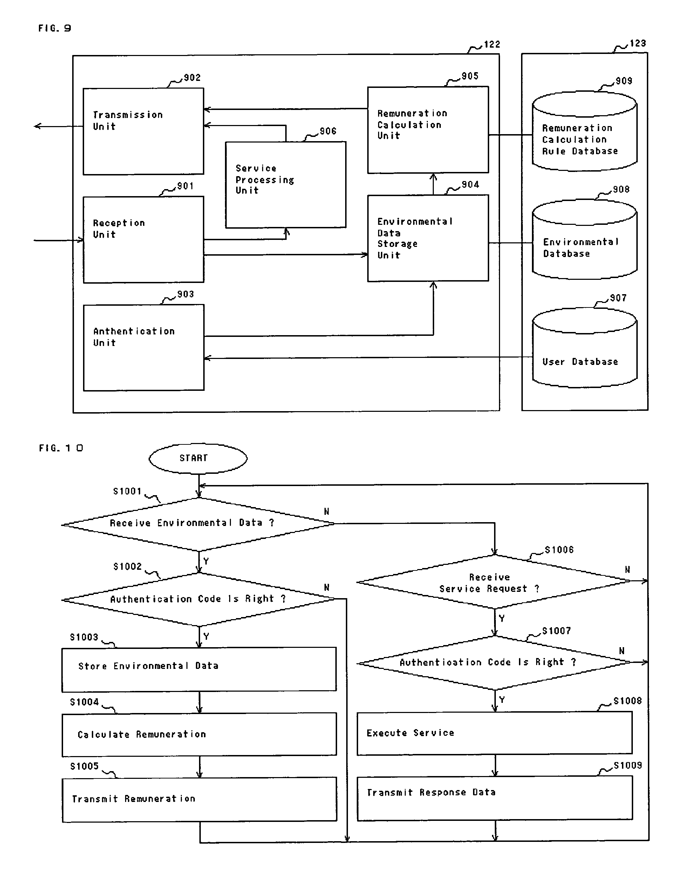

Next, functional block configuration of center 120 will be described with the use of Fig. 9.

Reception unit 901 receives environmental data etc. and a service request from communication terminal 100. This reception unit 901 operates as an objective information reception means.

Transmission unit 902 transmits calculated remuneration information and service provision data to communication terminal 100 and operates as remuneration information transmission means.

Authentication unit 903 determines whether received authentication code is authentic compared with registration data in user's database 907.

Environmental data storage unit 904 stores received environmental data etc. in environmental database 908.

Remuneration calculation unit 905 calculates remuneration information according to received environmental data based on the remuneration calculation rule database. This remuneration calculation unit 905 comprises the remuneration calculation means.

Service processing unit 906 calculates the shortest distance between two points on a map according to processing request from communication terminal 100 and operates the service function such as provision of environmental data of a specific point on a map, for example noise data of the point, based on collected environmental data.

Operation of center 120, having such a configuration, will be described with the use of flow chart of Fig. 10.

Firstly, reception unit 901 checks whether environmental data etc. are received from communication terminal 100 (step S1001). In cases where they are received, authentication unit 903 checks whether authentication code received with environmental data is the authentication code registered in advance in user database 907 in database 123 and confirms that it is authentic (step S1002). The case in which the authentication code is not authentic, it returns to step S1001. When it is determined to be authentic, environmental data etc. received by environmental data storage unit 904 are stored in environmental database 908 in database 123. In this case, environmental data storage unit 904 counts environmental data of each area partitioned based on the latitude and longitude of the communication terminal (step S1003).

Secondly, remuneration calculation unit 905 calculates remuneration information for received environmental data etc. based on the remuneration calculation rule in the remuneration calculation rule database 909 (step S1004).

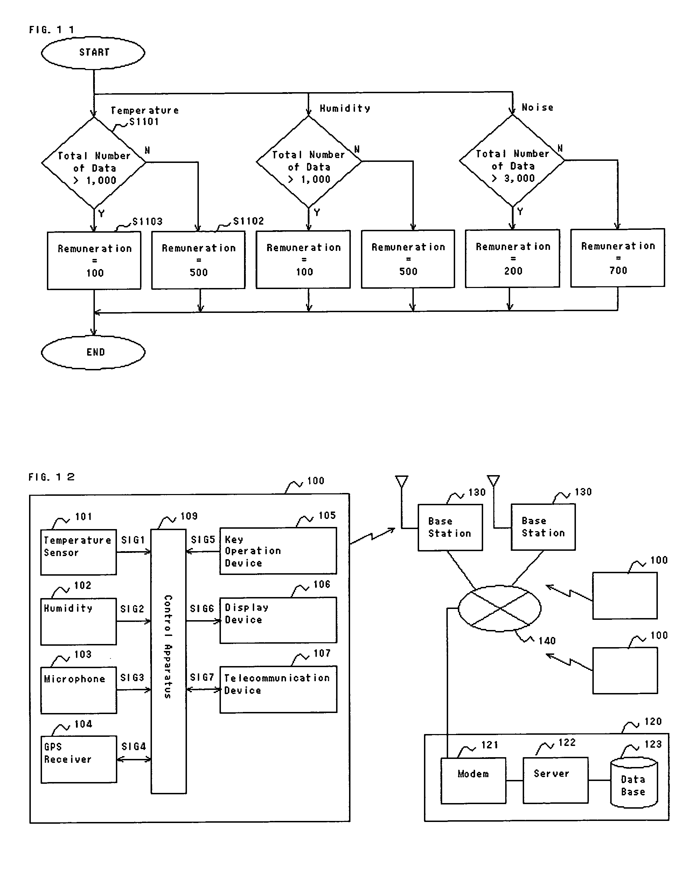

Fig. 11 shows a part of this remuneration calculation rule. Therefore, as shown in Fig. 11, the type of environmental data is determined after sorting to a predetermined area according to positional information of the reception data.

In cases where the reception data is temperature data, it is determined whether the number of temperature data received in environmental database 908 exceeds 1,000 (step S1101). When they do not exceed 1,000, 500 points are given as remuneration (step S1102). When they exceed 1,001, 100 points are given (step S1103).

With reference to other environmental data, as with the above-mentioned case, remuneration information is changed according to the number of stored data in environmental database 908.

Next, transmission unit 902 transmits remuneration information calculated in remuneration calculation unit 905 to communication terminal 100, a provider of environmental data etc. (step S1005). After that it returns to step S1001.

However, in cases where reception unit 901 does not receive environmental data etc. from communication terminal 100, whether or not a service request has been received is checked (step S1006). When a service request has not been received, it returns to step S1001. When a service request has been received, authentication unit 903 checks whether the authentication code transmitted with the service request is the same as the authentication code registered in advance in user's database 907 in database 123, and confirms whether it is authentic (step S1007). When the authentication code is not authentic, it returns to step S1001. When it is authentic, the service requested by communication terminal 100 is executed.

In cases where terminal 100 requests a navigation service, service processing unit 906 calculates the shortest route according to the map information database which is not displayed using the route detection function (step S1008).

Next, transmission unit 902 responds to the request for the shortest route calculated in step S1008 to communication terminal 100 (step S1009).

That which is described above is the configuration and processes of center 120.

Thereby center 120 becomes able to easily acquire environmental data of user's destination without setting an environmental data-measuring device because environmental data etc. are automatically transmitted at predetermined times.

Moreover, it becomes possible for center 120 to change the content of remuneration information given to the communication terminal arbitrarily by changing the calculation rule of remuneration calculation rule database 909, thereby making it possible to avoid overpaying for environmental data of declining value. Note that the above-mentioned configuration can be realized by updating of the remuneration calculation rule of remuneration calculation rule database 909 by remuneration calculation unit 905 according to the amount of stored data notified from environmental data storage unit 904 or by changing remuneration calculation rule wherein remuneration information is reduced to half.

Note that, in order to determine whether communication terminal 100 is being used indoors, center 120 determines whether current position is on a street in reference to received current positional data and map information database which is not displayed. When received current positional data indicates the user is on a street, center 120 determines that the measurement is operated outdoors. Moreover, the user can notify whether he is indoors or outdoors by using key operation device 105. In this case, this information is attached to environmental information transmitted from communication terminal 100 to center 120.

Moreover, it is possible to change the remuneration value according to area, acquisition period (including time), and sort of environmental data in addition to determination of value of the reception data according to the amount of acquired environmental data. Thereby it becomes easy to collect environmental data of area and period wherein it would normally be difficult to collect environmental data.

Furthermore, reduction of communication costs can be achieved, thereby improving customer service. Therefore, center 120 manages each user's acquired points and reduces communication costs based on the acquired points.

Note that the detection function that the current position GPS receiver has, may not be essential for communication terminal 100 because the detection unit of the current position is not necessary if the setting position of communication terminal 100 to center 120 is registered in advance. Therefore, even if communication terminal 100 were a stationary type at a specified point or a mobile type, it would become possible to make it work equally well by measuring environmental data only when it is attached to a stationary battery charger, and/or by pre-registering the setting point of communication terminal 100 with center 120.

Moreover, it is able to give remuneration information for an unspecified number of communication terminals without an authentication code. But, in this case, it is necessary for the center 120 to acquire the address and ID from the communication terminal in order to specify the communication terminal to which remuneration is to be transmitted.

Moreover, current time calculation unit 301 calculating predetermined time may not be essential. Therefore, the time at which the environmental data generation unit 302 and current positional data generation unit 303 generate each data, need not be a predetermined time notified by current time calculation unit 301. For example, the time at which the user turns on the power of the communication terminal and the time at which the user uses the function of communication terminal may be permitted. Besides, the timing of transmission of this data may be arbitrary timing wherein environmental data generation unit 302 and current positional data generation unit 303 transmit data to transmission control unit 306.

Fig. 12 is a block diagram of the payment system in the embodiment of the present invention.

Fig. 12 differs from the configuration of the first embodiment of Fig. 1 in that memory card 108 is not included in communication terminal 100. Center 120 is the same as in the first embodiment.

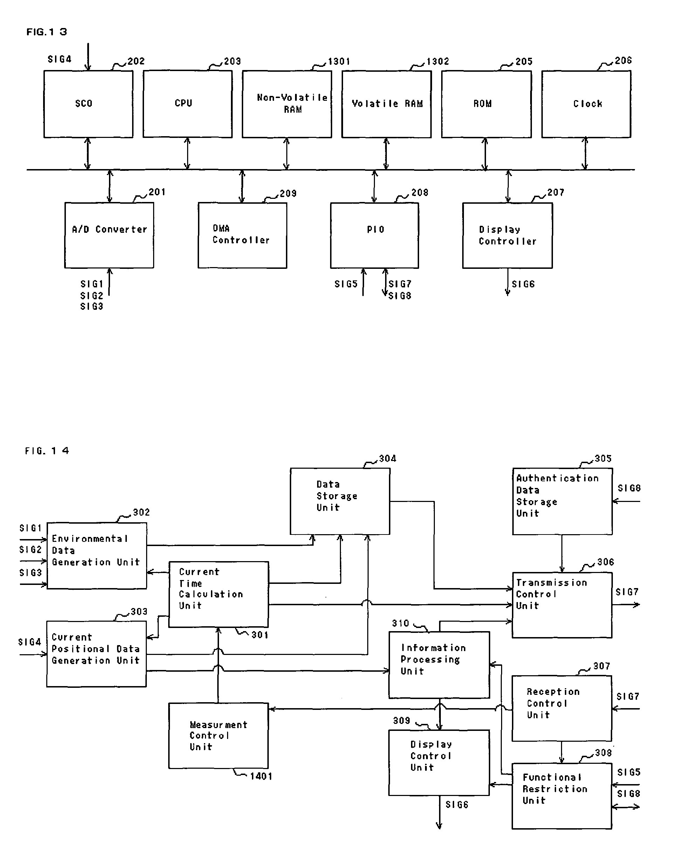

Additionally, Fig. 13 shows the hardware configuration of control unit 109 in communication terminal 100. It differs from the configuration of the first embodiment of Fig. 1 in that the non-volatile RAM 1301 and volatile RAM 1302 are provided instead of RAM 204.

In the second embodiment of the present invention, authentication data and remuneration information are stored in non-volatile RAM 1301. Therefore, authentication data and remuneration information are unique in communication terminal 100, especially authentication data that is not the authentication code for specifying the user as described in the first embodiment but an authentication code for specifying the communication terminal.

Except for the above-identified differences, the operation of the second embodiment is substantially the same as in the first embodiment.

Thereby it becomes possible for users to acquire remuneration information without inconvenient operations and to use various service functions of communication terminal 100 because communication terminal 100, to which external memory is not attached, automatically measures environmental data etc. at predetermined times and transmits them to center 120.

Fig. 14 is a functional block diagram of control apparatus 109 in the embodiment of the present invention. In Fig. 14, the configuration of the payment system and hardware are the same as in the first embodiment.

Fig. 14 differs from the configuration of the first embodiment of the present invention in that the measurement control unit 1401 is included. The measurement control unit 1401 determines whether or not to measure environmental data etc. based on remuneration expectation value list, which is the remuneration expectation information received from center 120, through reception control unit 307 comprising a remuneration expectation information reception means.

According to this remuneration expectation value list, categories of environmental data, for example, remuneration information based upon temperature, humidity, and noise can be calculated respectively. This measurement control unit 1401 comprises objective information transmission determination means.

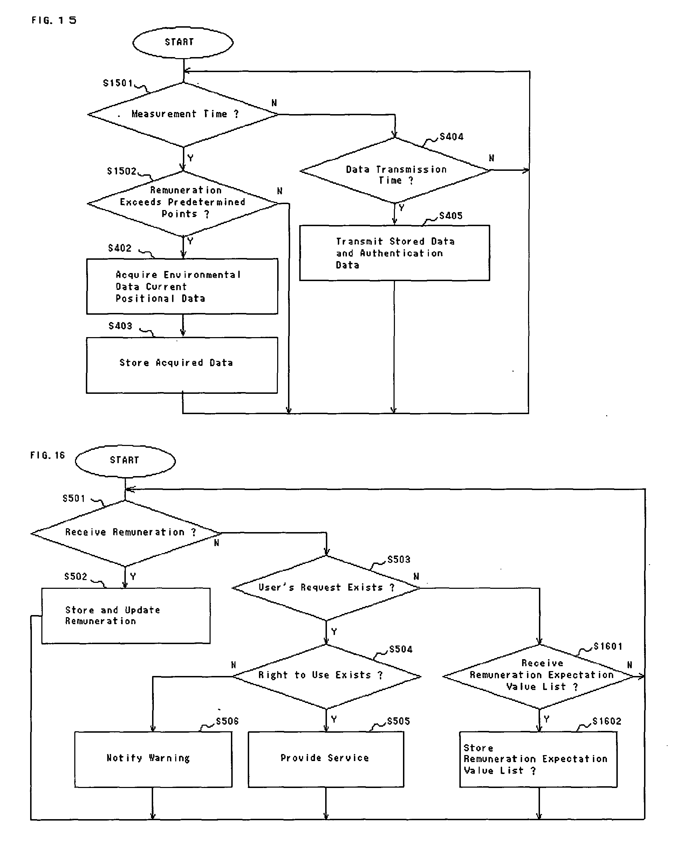

Hereinafter, operation of communication terminal 100, having configuration of the third embodiment of the present invention, will be described with the use of the flow chart of Fig. 15 and Fig. 16.

Fig. 15 shows the operations for acquisition of environmental data and its transmission to center 120, and Fig. 16 shows the operations for reception of remuneration information from center 120 and the process to handle the user's request.

In Fig. 15, current time calculation unit 301 checks whether the current time is a predetermined measurement time (step S1501). When it is not the proper measurement time, it returns to step S404. Processes after step S404 are the same as in the first embodiment in Fig. 4.

However, when it is the predetermined measurement time, measurement control unit 1401 checks how many points are acquired as remuneration information for environmental data, which is the object of measurement according to the after-mentioned received remuneration expectation value list. When the number of points exceeds the number of predetermined points (hereinafter referred to as determination remuneration standard value), it goes to step S402. After step S402, the same operations as the first embodiment are processed.

However, when the number of points is less than the number of predetermined points, it returns to step S1501 (step S1502).

In addition, in Fig. 16, processes of step S501 to step S506 are the same as in the first embodiment in Fig. 5. But when reception control unit 307 does not receive user's request, it checks whether remuneration expectation value list has been received from center 120 (step S1601). When it has not been received, it returns to step S501.

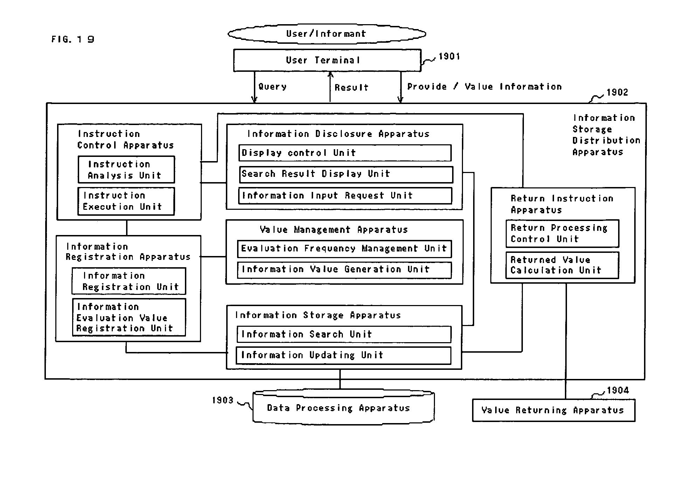

Here, remuneration expectation value corresponds to the remuneration information for the provision of environmental data to center 120, the remuneration expectation value list is a list wherein remuneration expectation value is classified with respect to each area. Fig. 18 shows an example of a remuneration expectation list. Although, it is prescribed that remuneration information given for noise data 1801 in an area from north latitude 32 degrees to 34 degrees and east longitude 130 degrees to 132 degrees is 20 points of usage rights, remuneration information given for noise data 1802 in an area from north latitude 34 degrees to 36 degrees and east longitude 132 degrees to 134 degrees is 80 points because the latter has a higher information value than the former.

In cases where this remuneration expectation value list is received, measurement control unit 1401 stores it on RAM 204 (step S1602), after that it returns to step S501.

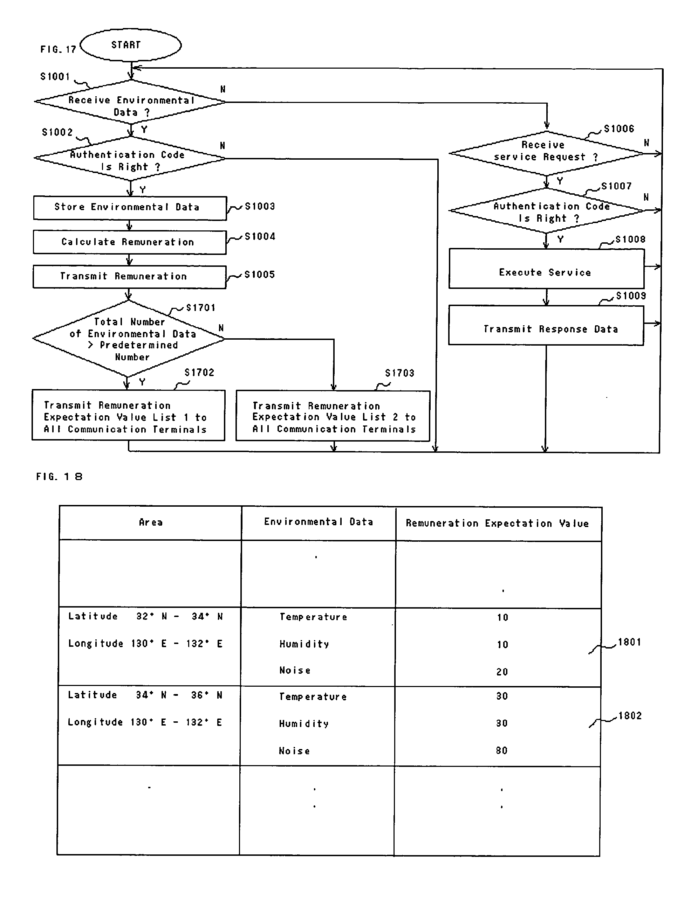

Next, operation of center 120 in the third embodiment will be described with the use of the flow chart in Fig. 17.

Although processes from step S1001 to step S1009 are the same as in the first embodiment, they differ in that the remuneration expectation value list acquired by transmission of environmental data is transmitted to all communication terminals 100, after transmitting remuneration information for environmental data received in step S1005 to communication terminal 100, as the information provider.

Therefore, transmission unit 902 transmits remuneration information calculated in remuneration calculation unit 905 to communication terminal 100 as provider of environmental data etc. (step S1005). After that, remuneration calculation unit 905 checks whether the number of environmental data stored in the environmental data storage unit 904 is stored to a predetermined number (step S1702). Then, remuneration information is changed according to the rule wherein the predetermined number of data is set with respect to each class of environmental data, for example temperature, humidity and noise etc., or to each area, and the amended remuneration expectation value list is transmitted to all communication terminals 100 or to communication terminal 100 related to the amended remuneration expectation value list (step S1702 and step S1703). After that, it returns to step S1001.

In the payment system in the third embodiment processing the above-mentioned operations, when acquired remuneration is lower than the predetermined one, communication terminal 100 does not measure the environment. Therefore, it is possible to reduce electrical consumption by not doing inefficient measurement of acquiring points when communication terminal 100 has sufficient points stored.

However, when center 120 collects a predetermined number of required environmental data, subsequent environmental data becomes unnecessary. Remuneration information of inconsequential environmental data is set to a low rate, in order to reduce the transmission of inconsequential environmental data from communication terminal 100.

Thereby, for example in cases where administrator of center 120 defrays the communication cost of environmental data from communication terminal 100, it becomes possible for the administrator to reduce the communication cost by changing the remuneration expectation value list, comparing it with the case where remuneration expectation value list has not been changed. Moreover, although in the present embodiment, the remuneration expectation value list is transmitted from center 120 to all communication terminals 100 for notifying it to communication terminal 100, a method wherein communication terminal 100 accesses center 120 at regular intervals and acquires the remuneration expectation value list may be adopted.

Moreover, a system in which not the administrator but the server automatically updates the remuneration expectation value list, wherein the remuneration expectation value is reduced by half when, for example, the server can collect a predetermined number of data.

Further, in cases where communication terminal 100 has a function to set the determination remuneration standard value from the key operation device 105 to the measurement control unit, it becomes possible for the user to have more chances of receiving services without increasing electrical consumption of communication terminal 100 by setting the determination remuneration standard value to a low rate.

Additionally, although in the third embodiment, environmental data is transmitted from communication terminal 100 to center 120 at a predetermined time, in cases where position of communication terminal 100 is specified, center 120 may query required environmental data to communication terminal 100 in the area concerned.

Thereby it becomes possible for center 120 to acquire only necessary information, so that it becomes able to avoid the provision of extra remuneration and loss of communication costs.

Moreover, in the third embodiment, although the remuneration expectation value list is transmitted to all communication terminals 100 after center 120 transmits remuneration information for environmental data received by communication terminal 100 as the information provider, they may be distributed to all communication terminals in advance.

Information processing apparatus, related to the fourth embodiment of the present invention, wherein objective information transmitted from the communication terminal can be referenced, for example inspected, will be described.

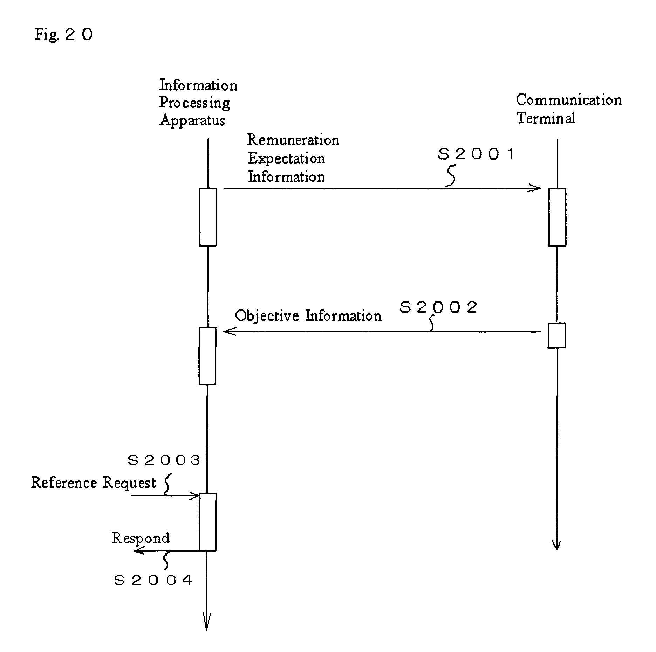

Fig. 20 is a sequential diagram illustrating the reception and transmission between the information processing apparatus and the communication terminal.

In step S2001, the information processing apparatus transmits remuneration expectation information to the communication terminal. The communication terminal determines whether objective information is to be transmitted based on this remuneration expectation information. In cases where transmission is determined, in step S2002, objective information is transmitted to the information processing apparatus. Step S2001 and step S2002 are executed repeatedly and properly. Besides, there is no relationship between the frequency of execution of step S2001 and the frequency of execution of step S2002. Therefore, step S2002 may be executed any number of times.

After that, information processing apparatus, in step S2003, receives a reference request of objective information from a personal computer and mobile terminal etc. and in step S2004, responds to the reference request.

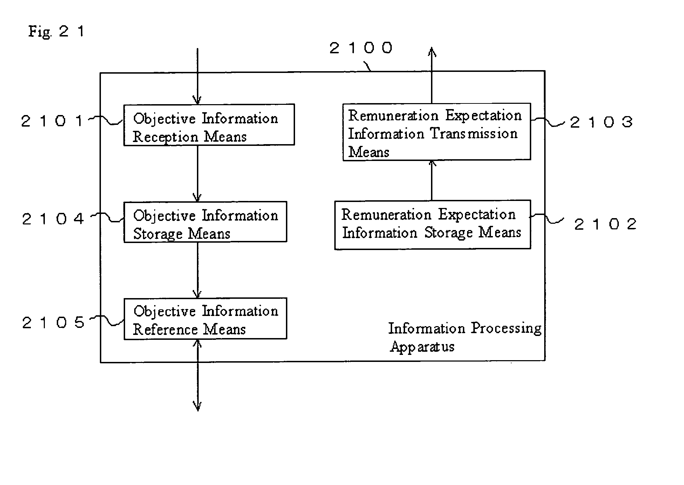

Fig. 21 is a functional block diagram of the information processing apparatus related to the present embodiment. Information processing apparatus 2100 comprises objective information reception means 2101, remuneration expectation information storage means 2102, remuneration expectation information transmission means 2103, objective information storage means 2104, and objective information reference means 2105. These means are possible to realize by programs installed in computers.

"Objective information reception means" 2101 receives objective information. Here, "objective information" differs in definition from that of the first embodiment, second, and third embodiments. Therefore, in the present embodiment, "objective information" corresponds to information related to information attribute information indicating categories of information etc. and to objective information. Hence, objective information in the present embodiment is a subordinate concept of objective information described in the first, second, and third embodiments. "Objective information" corresponds to information independent of subjectivity of user who measures data. For example, temperature data, humidity data, ultraviolet level data, noise level data, dust level data, pollen level data, and environmental visual data may be included. Moreover, examples of information attribute information indicating classes of objective information include, indication of temperature data, humidity data, ultraviolet level data, noise level data, dust level data, pollen level data, and environmental visual data. Moreover, information of times and places that objective information has been acquired is included. For example, information indicating when temperature has been measured and where it has been measured is included.

"Reception" corresponds to external acquisition of information and generation of information based on external acquisition. Cases in which objective information is digitally expressed and transmitted, objective information reception means acquires such a digital signal and generates information based on acquired digital signal.

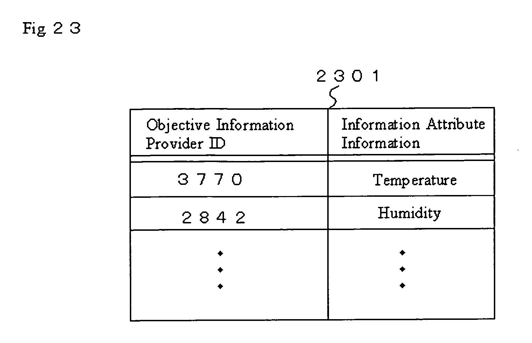

As an example of generation, objective information reception means 2101 may receive objective information and may generate objective information by relating received objective information to information attribute information. For example, since the communication terminal transmits only a class of objective information, in cases where the communication terminal and information attribute information can be specified, objective information can be generated based on objective information transmitted from the communication terminal. For example, as shown in Fig. 23, table 2301 illustrating correspondence of objective information provider ID, for identifying communication terminal transmitting objective information and information attribute information, is stored in the information processing apparatus. Then, every time objective information is received, table 2301 is searched in order to specify the objective information provider ID. Subsequently, objective information may be generated by relating information attribute information to received objective information.

"Remuneration expectation information storage means" 2102 stores remuneration expectation information. Here, "remuneration expectation information" corresponds to information indicating the content of remuneration information given to information source, information provider of objective information received in objective information reception means 2101, and information wherein above-mentioned information is related to information attribute information.

For example, in cases where information indicating content of remuneration is, "10 points" and information attribute information is, "temperature, Yokohama", remuneration expectation information which can be construed as, "10 points are given as remuneration information for objective information indicating temperature measured in the city of Yokohama" is composed by relating "10 points" to "temperature, Yokohama".

Another example of remuneration expectation information is;
information indicating remuneration for pictures taken at a time and place at which a serious accident occurs. In this case, the further the place is, the lower remuneration becomes, and remuneration before occurrence of the accident is set to a lower remuneration than after the occurrence of the accident. Thereby, administrator of information processing apparatus 2600 becomes able to acquire visual data of the serious accident.

"Storage" corresponds to storing information in a readable state with a certain level of time continuity. For example, it stores data in semiconductor memory and a hard disk drive.

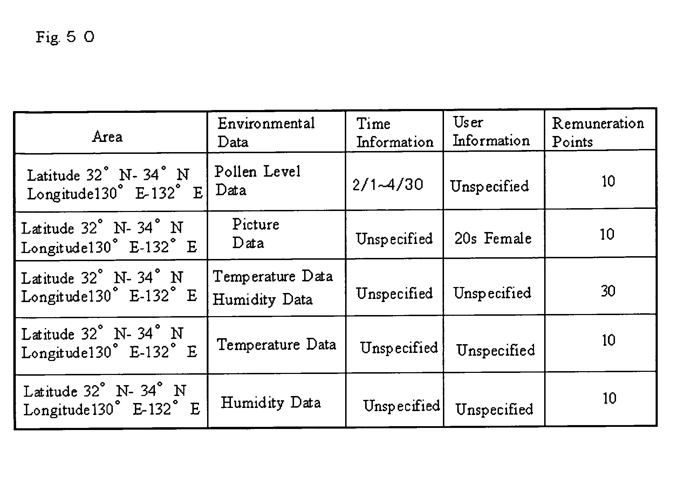

Fig. 50 illustrates remuneration expectation information stored in the form of a table. In table 5001, "area", "class", "time information", and "user information" indicate information attribute information. This information attribute information is related to information indicating the content of the remuneration information.

Note that "temperature data" and "humidity data" are stored in the fourth queue indicating classes in table 5001, which respond to the cases where both temperature data and humidity data are transmitted. Therefore, for example, in cases where both temperature data and humidity data are requested to be acquired at the same time, more remuneration is given in the case where both temperature data and humidity data are transmitted at the same time than in the case where one of them is transmitted independently.

"Remuneration expectation information transmission means" 2103 transmits remuneration expectation information stored in remuneration expectation information storage means 2102 to the information source. "Transmission" corresponds to outputting information to an external device. In cases where remuneration expectation information is expressed in a digital signal, remuneration expectation information transmission means outputs such a digital signal.

"Objective information storage means" 2104 stores objective information received in objective information reception means 2101 in relation to its information attribute information. For example, in cases where objective information indicates temperature in the city of Yokohama, it relates "temperature in Yokohama" as information attribute information to objective information indicating temperature, and stores them.

"Objective information reference means" 2105 corresponds to means for reference of objective information stored in objective information storage means 2104.

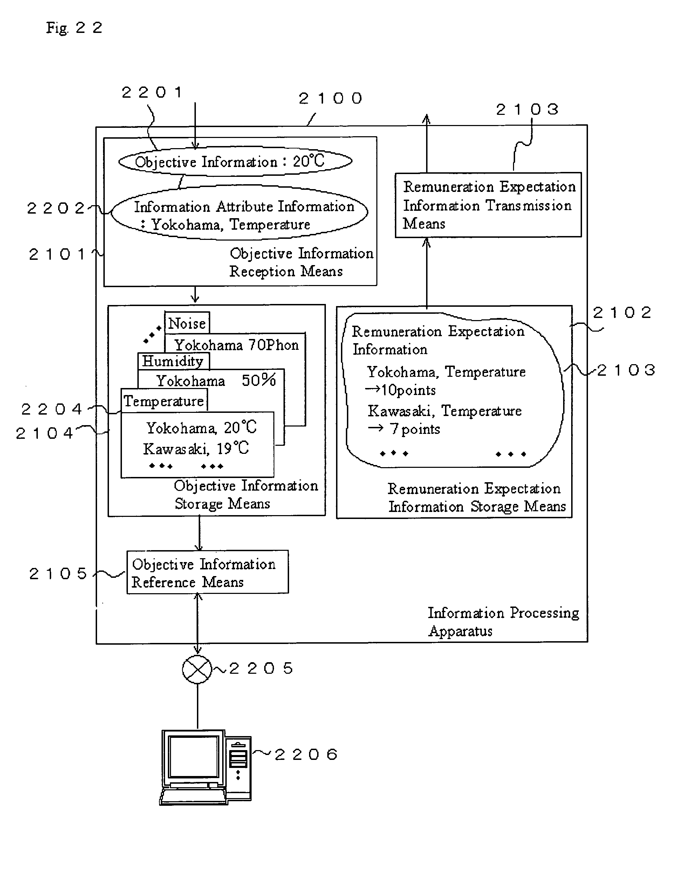

Fig. 22 is a functional block diagram corresponding to the block diagram of Fig. 21. Objective information reception means 2101 receives objective information 2201 related to information attribute information 2202.

Remuneration expectation information storage means 2102 stores remuneration expectation information 2203. Remuneration expectation information 2203 indicates that, for example, 10 points are given to the information provider transmitting temperature measured in the city of Yokohama and 7 points are given to information provider transmitting temperature measured in the city of Kawasaki.

Objective information storage means 2104 stores objective information 2204 related to information attribute information.

Objective information reference means 2105 is connected to the communication network 2205 and is transmitted by personal computer 2206 connected to the communication networks 2205. Objective information reference request is received and information stored in objective information storage means 2104 is transmitted. At this point, information converted HTML format etc. may be transmitted.

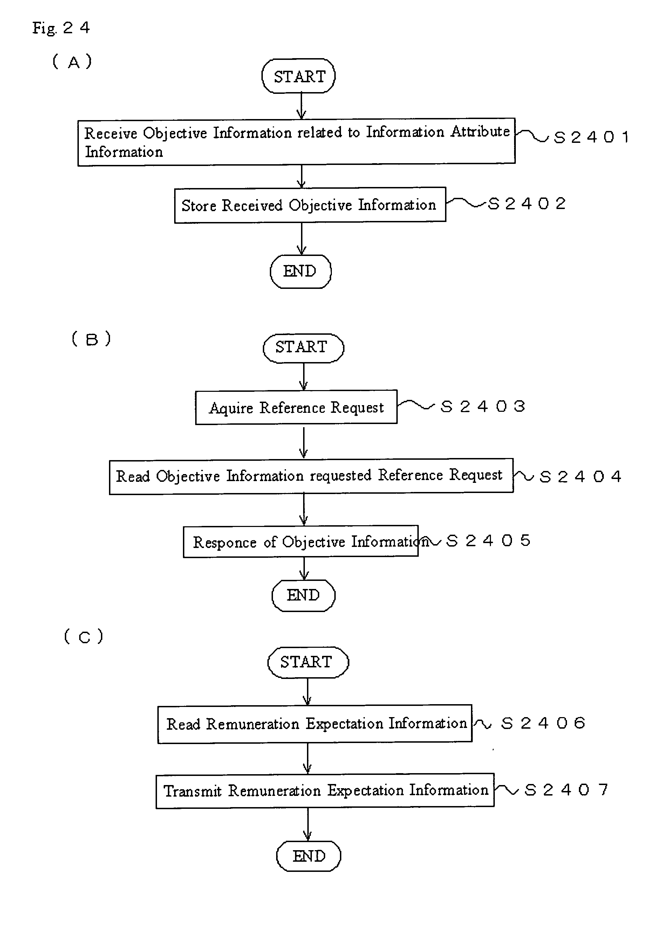

Fig. 24 is a flow chart of the process of information processing apparatus 2100.

Fig. 24A is a flow chart of the processes of objective information reception means 2101 and objective information storage means 2104. In step S2401, objective information related to information attribute information is received. In step S2402, received objective information is stored. Information processing apparatus 2100 executes these processes every time objective information is received.

Fig. 24B is a flow chart of the processes of objective information reference means 2105. In step S2403, a reference request is received. In step S2404, objective information requested by acquired reference request is read from objective information storage means 2104. In step S2405, objective information is responded to. Information processing apparatus 2100 executes these processes every time a reference request is acquired.

Fig. 24C is a flow chart of the processes of remuneration expectation information storage means 2102 and remuneration expectation information transmission means 2103. In step S2406, remuneration expectation information is read from remuneration expectation information storage means 2102. In step S2407, remuneration expectation information is transmitted by remuneration expectation information transmission means 2103. Information processing apparatus 2100 executes these processes, for example, at a predetermined time interval or at the time or every request from a communication terminal transmitting objective information is received.

In the present embodiment, acquisition of objective information in return for transmission of remuneration expectation information, thereby it becomes possible to acquire objective information efficiently by updating remuneration expectation information according to the situation of acquisition of objective information.

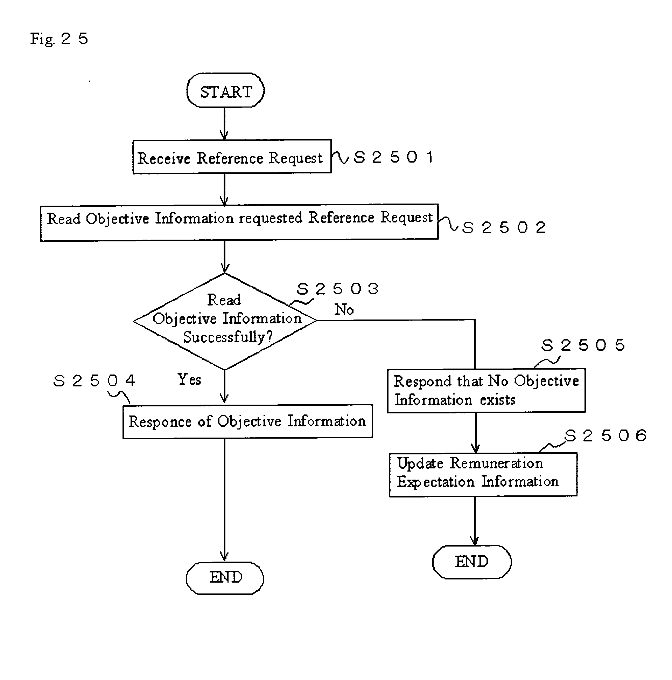

Moreover, cases in which objective information reference means 2105 processes, as in Fig. 25, it becomes possible to collect objective information necessary for responding to a reference request, by setting remuneration for objective information that cannot respond to a reference request, to a high rate.

Processes illustrated in Fig. 25 are as follows. In step S2501, a reference request is received. In step S2502, objective information requested by reference request is read. In step S2503, it is determined whether objective information can be read. If so, it will return to step S2504, and if not, it will return to step S2505. In step S2504, objective information is responded to. In step S2505, the response indicates that objective information does not exist. In step S2506, remuneration expectation information is updated. In this case, remuneration for information attribute information related to objective information requested by reference request may be set to a high rate.

Additionally, processes in step S2505 may be as follows. The history of objective information that cannot be read in step S2503 or the history of reference requests of such objective information is stored. Then, remuneration expectation information of objective information that cannot be read, in spite of a reference request, is updated to be set to high-rate. Thereby it becomes possible to collect objective information without omission.

As the fifth embodiment of the present invention, information attribute information related to objective information and/or information processing apparatus updating remuneration expectation information according to the objective information will be described.

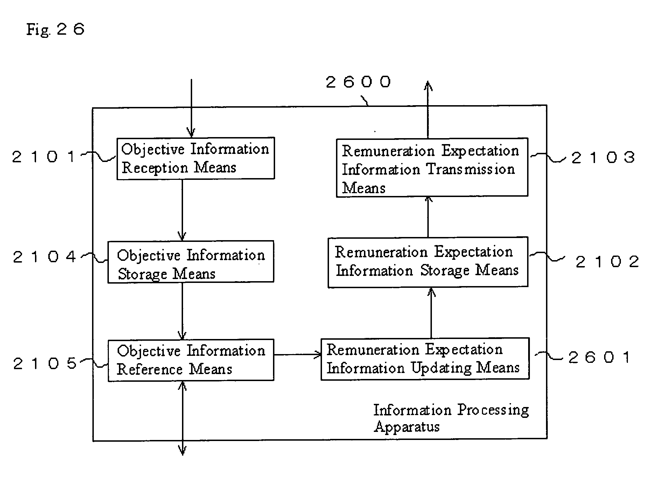

Fig. 26 is a functional block diagram of the information processing apparatus related to the present embodiment. As shown by comparing Fig. 21, information processing apparatus 2600 related to the present embodiment has a configuration wherein information processing apparatus 2100 of the fourth embodiment comprises remuneration expectation information updating means 2601.

"Remuneration expectation information updating means" 2601 updates information attribute information related to objective information referred by objective information reference means 2105 and/or remuneration expectation information stored in remuneration expectation information storage means 2102 according to the reference frequency.

Hence, in the present embodiment, remuneration expectation information stored in remuneration expectation information storage means 2102 is updated by remuneration expectation information updating means 2601. The updating is executed according to information attribute information related to objective information referenced by objective information reference means 2105 and/or to the reference frequency. Note that "the reference frequency" corresponds to reference frequency of objective information. Using "and/or", updating is executed according to any one of information attribute information and reference frequency or both of them. "according to information attribute information and/or to reference frequency" means a certain level of causal relationship exists between information attribute information and/or to reference frequency and updating. For example, higher remuneration is given for objective information containing the same information attribute information as objective information referred frequently, is updated.

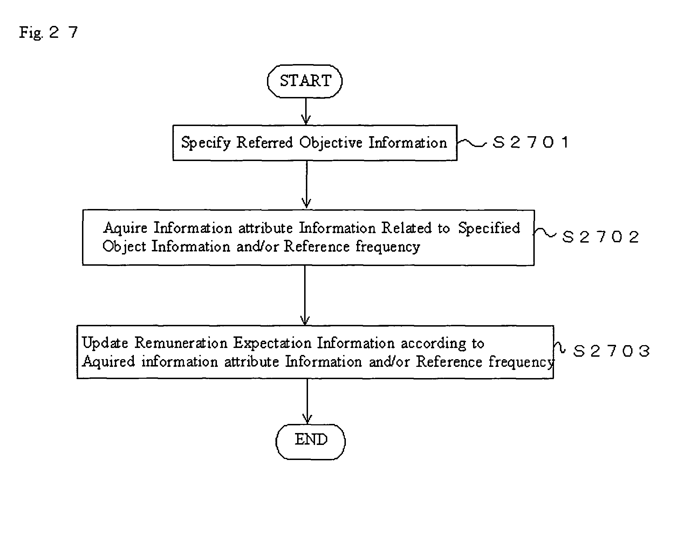

Fig. 27 is a flow chart of the process of information processing apparatus related to the present embodiment. In step S2701, referenced objective information is specified. For example, in cases where objective information reference means 2105 generates history corresponding to a reference request, referenced objective information is specified by the history.

In step S2702, information attribute information related to specified objective information and/or reference frequency are acquired. For example, acquisition is executed by analyzing the above-mentioned history.

In step S2703, remuneration expectation information is updated according to acquired information attribute information and/or reference frequency. For example, it updates as information indicating higher remuneration is related to information attribute information of referenced objective information. Moreover, it updates as information indicating lower remuneration is related to information sources of objective information referenced infrequently.

According to the present embodiment, for example, it becomes possible to give high remuneration for information sources transmitting objective information in high demand, so that it becomes possible for the information processing apparatus to detect the demand of objective information. Moreover, it becomes possible to collect required objective information efficiently.

As the fifth embodiment of the present invention, the information processing apparatus wherein remuneration expectation information is updated based on referenced objective information has been described. However, as the sixth embodiment of the present invention, information processing apparatus, wherein remuneration information for objective information that has not been referenced yet is updated, will be described

Configuration of information processing apparatus related to the present embodiment is the same as the configuration of information processing apparatus 2600 in the fifth embodiment illustrated in Fig. 26. But remuneration expectation information updating means 2601 updates remuneration expectation information stored in remuneration expectation information storage means 2102 according to time.

For example, in Japan, pollen allergen commonly develops in cedar pollen season. Consequently, in cedar pollen season, many people are concerned about the pollen levels of each area. Therefore, when pollen season comes, remuneration expectation information is updated to give high remuneration for objective information indicating pollen levels. When pollen season ends, remuneration expectation information is updated to give low remuneration.

Hence, in the present embodiment, remuneration expectation information updating means 2601 updates remuneration expectation information at predetermined times.

According to the present embodiment, since remuneration expectation information is updated without reference to objective information, it becomes possible to collect objective information in high demand in advance.

As the seventh embodiment of the present invention, information processing apparatus comprising means for calculating remuneration will be described.

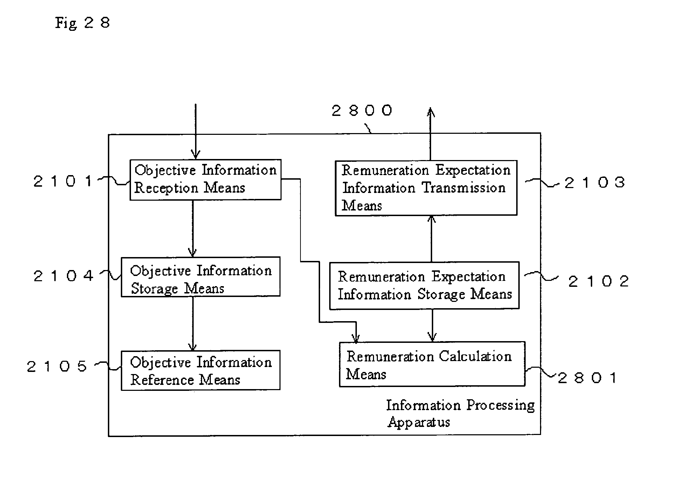

Fig. 28 is a functional block diagram of the information processing apparatus relating to the present embodiment. As becoming clear by comparing Fig. 21, the information processing apparatus 2800 related to the present embodiment has configuration wherein information processing apparatus 2100 in the fourth embodiment comprises remuneration calculation means 2801.

Remuneration calculation means 2801 calculates remuneration information based on said remuneration expectation information. Here, "remuneration information" corresponds to information indicating remuneration to be given according to information attribute information related to objective information transmitted from information source and the remuneration expectation information corresponds to remuneration expectation information stored in remuneration expectation information storage means 2102. For example, as shown in Fig. 22, in cases where information attribute information 2202, "Yokohama, temperature" is related to objective information 2201 transmitted by information source and remuneration expectation information, "Yokohama, temperature is 10 points" is stored in remuneration expectation information storage means 2102, remuneration information calculation means 2801 calculates 10 points.

According to the present embodiment, it becomes possible to calculate remuneration to be given for information source. Thereby, for example, it becomes possible to convert remuneration to money, to transfer it to the bank account of the information source owner, and, as explained in the next embodiment, to transmit remuneration information to information source. Thereby it becomes possible to promote transmission of objective information to information source.

As the eighth embodiment of the present invention, information processing apparatus transmitting remuneration information will be described.

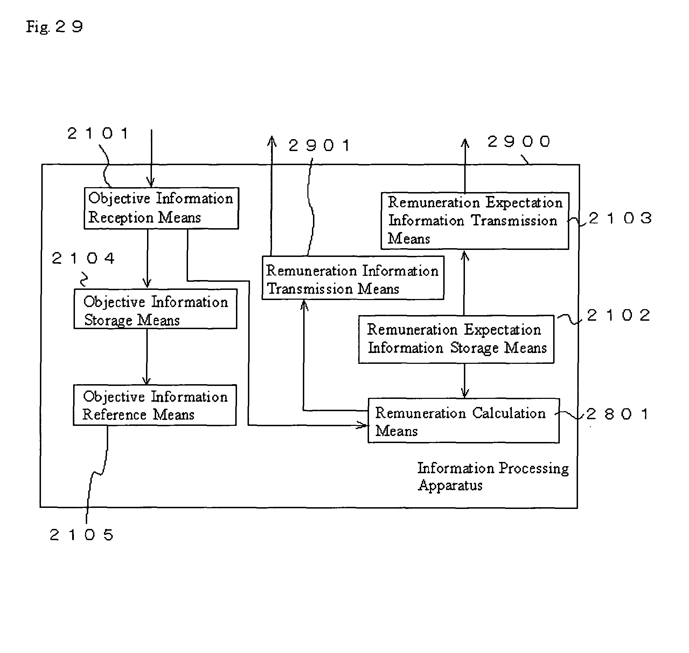

Fig. 29 illustrates a functional block diagram of the information processing apparatus related to the present embodiment. As becoming clear by comparing Fig. 28, the information processing apparatus 2900 related to the present embodiment has configuration wherein information processing apparatus 2800 in the seventh embodiment comprises remuneration information transmission means 2901.

Remuneration information transmission means 2901 transmits remuneration information calculated by remuneration calculation means 2801 to the information source. The information source corresponds to the information source to which remuneration indicated by remuneration information, calculated by remuneration information calculation means 2801, is given.

For example, in cases where remuneration expectation information 2203 as illustrated in Fig. 22 is stored in remuneration expectation information storage means 2102, the information source transmits the temperature in Yokohama and 10 points are calculated in remuneration calculation means 2801, so that 10 points are transmitted to information source by remuneration information transmission means 2901. Then, it becomes possible to remove restrictions on functions in the communication terminal and to use it by receiving remuneration information.

Note that transmitted remuneration information is not limited to points. For example, it may be a program. This program is operated on a communication terminal receiving remuneration information, thereby new functions may be given to the communication terminal.

According to the present embodiment, remuneration information is transmitted to the information source, then, for example, a restricted function becomes usable, so that the information provider is motivated to transmit objective information.

As the ninth embodiment of the present invention, information processing apparatus, wherein received objective information is related to information attribute information and remuneration expectation information is related to information indicating attribution of information source, will be described.

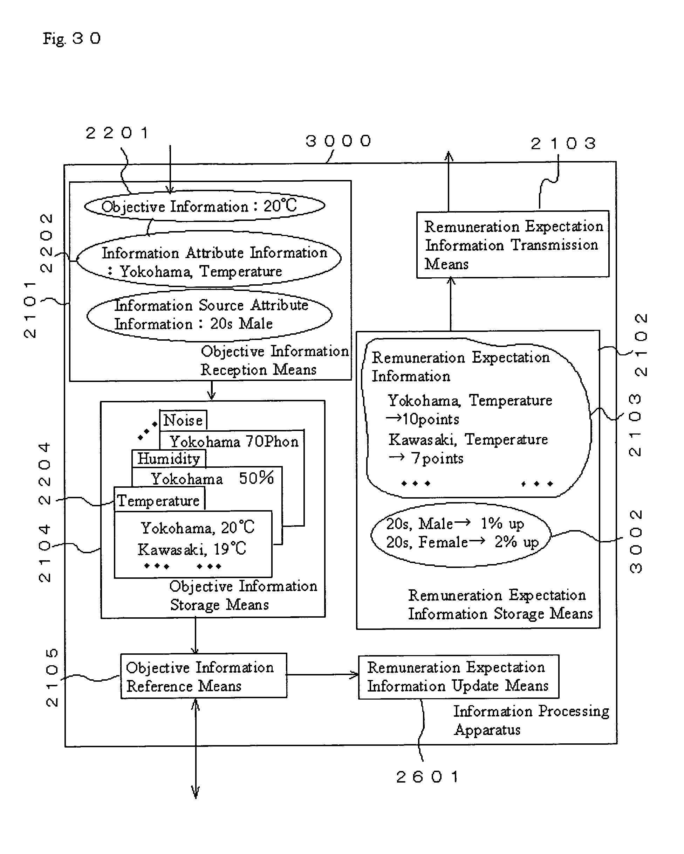

Fig. 30 is a functional block diagram of the information processing apparatus related to the present embodiment. Information processing apparatus 3000 related to the present embodiment comprises information processing apparatus 2600 relating to the fifth embodiment and the sixth embodiment wherein the following three aspect are modified.

In the first modified aspect, objective information received by objective information reception means 2101 is further related to information source attribute information. Here, "information source attribute information" corresponds to information indicating attribution of information source. Examples of such information include, age, sex, occupation, and preference of owner of communication terminal as information source. Moreover, manufacturer, model number, serial number, and date of manufacture of communication terminal as the information source may be displayed.

In the second modified aspect, remuneration expectation information storage means 2102 stores remuneration expectation information in relation to information source attribute information. For example, as shown in Fig. 30, age and sex of owner of communication terminal as information source is used as information source attribute information, and increase and decrease of remuneration indicated in remuneration expectation information is illustrated by age and sex. For example, it is expressed that remuneration for objective information from information source, owned by a male in his 20's, increases 1 %. Moreover, for example, remuneration for information source that has been used for short period may be set to a high rate because it measures objective information accurately.

Note that there are various correspondence of information source attribute information and remuneration expectation information in addition to examples illustrated in Fig. 30. For example, remuneration expectation information may be expressed in relation to information source attribute information as 11 points are given for temperature measured in Yokohama by information source owned by a male in his 20's, and 10 points are given for noise measured in Kawasaki by information source owned by a female in her 20's.

In the third modified aspect, remuneration expectation information updating means 2601 updates remuneration expectation information stored in remuneration expectation information storage means 2102 according to information source attribute information.

For example, in cases where objective information from information source owned by a female in her 20's is referred to more often than objective information related to other information source attribute information, it updates as remuneration for information source owned by a female in her 20's is a high rate. For example, in Fig. 30, remuneration for a female in her 20's is updated as it increases from 2% to 3%.

According to the present embodiment, it becomes possible to calculate remuneration according to the information source and to set adequate remuneration according to the information source. Moreover, it is able to classify behavioral patterns according to the attribution of information source, thereby it is used for marketing.

In the tenth embodiment of the present invention, a communication terminal determining whether objective information is to be transmitted, according to remuneration expectation information, will be described. Communication terminal described in the present embodiment makes a pair of information processing apparatus mainly described as the fourth embodiment.

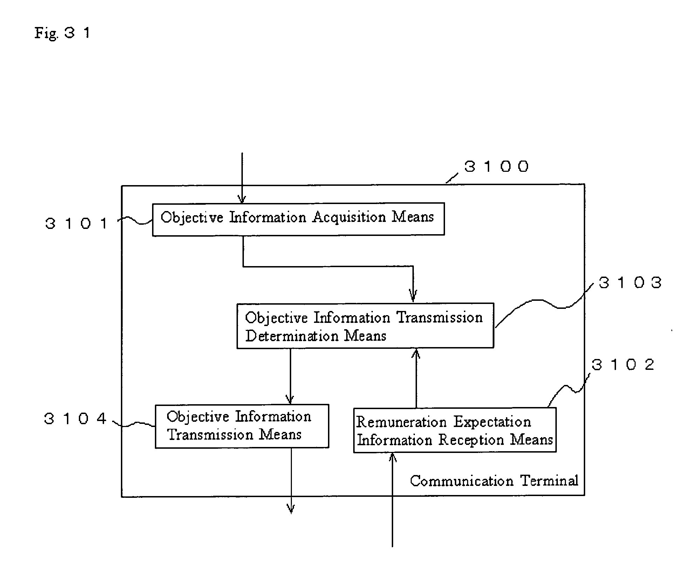

Fig. 31 is a functional block diagram of a communication terminal related to the present embodiment. The communication terminal comprises communication terminal 3100, objective information acquisition means 3101, remuneration expectation information reception means 3102, objective information transmission determination means 3103, and objective information transmission means 3104. These means can be realized by way of a program installed in a computer.

Objective information acquisition means 3101 acquires objective information. For example, objective information is acquired by the temperature sensor, humidity sensor, noise sensor, and dust sensor etc. Moreover, in cases where the communication terminal is placed in a movable body such as a car etc., objective information is acquired by a sensor placed in the movable body. For example, temperature information may be acquired by the temperature sensor placed in a car, or degree of congestion on a train calculated by the compression of springs under the train, may be acquired.

Remuneration expectation information reception means 3102 receives remuneration expectation information. For example, remuneration expectation information transmitted by the information processing apparatus described in the fourth embodiment.

Objective information transmission determination means 3103 calculates remuneration acquired in return for the transmission of the objective information according to the remuneration expectation information and determines whether the objective information is to be transmitted based on the result of a calculation. The objective information corresponds to objective information acquired in objective information acquisition means 3101. The remuneration expectation information corresponds to remuneration expectation information acquired in remuneration expectation information reception means 3102.

Objective information transmission determination means 3103 calculates remuneration information first. Therefore, remuneration information to be acquired is calculated based on remuneration expectation information received in remuneration expectation information reception means 3102. Secondly, it determines whether objective information is to be transmitted based on calculated remuneration. For example, in cases where calculated remuneration is higher than the predetermined remuneration, it determines to transmit.

Objective information transmission means 3104 transmits the objective information in cases where, transmission is determined by objective information transmission determination means 3103. For example, it transmits to the information processing apparatus in the fourth embodiment.

Moreover, objective information transmission means 3104 may transmit objective information after relating information attribute information to objective information. In cases where information attribute information can be related to objective information on the information processing apparatus side, objective information transmission means 3104 does not need to do it.

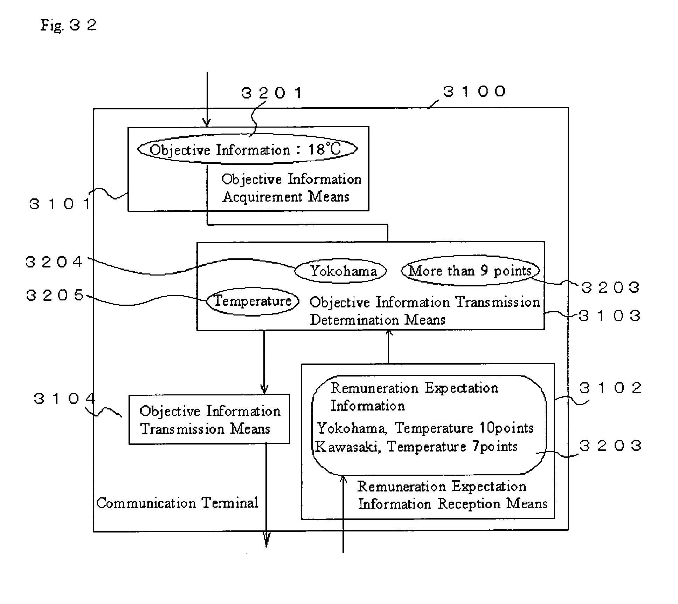

Fig. 32 is a functional block diagram wherein a functional block diagram of Fig. 31 is concretely expressed. Objective information acquisition means 3101 acquires, for example, "18 degrees" as objective information 3201 by the temperature sensor. Remuneration expectation information reception means 3102 receives remuneration expectation information 3202 wherein 10 points represent remuneration information for temperature in the city of Yokohama, and 7 points represent remuneration information for temperature in the city of Kawasaki are given. Consequently, objective information transmission determination means 3103 calculates 10 points as remuneration information for transmission of objective information 3201 based on information 3205 indicating temperature, one piece of objective information acquired in objective information acquisition means 3101, and information 3204 indicating that the current position is the city of Yokohama by the GPS sensor. Moreover, objective information transmission determination means 3103 stores or reads information, for example, "more than 9 points" as standard of determination, compares it with calculated 10 points, and determines to transmit objective information. Therefore, objective information transmission means 3104 transmits objective information.

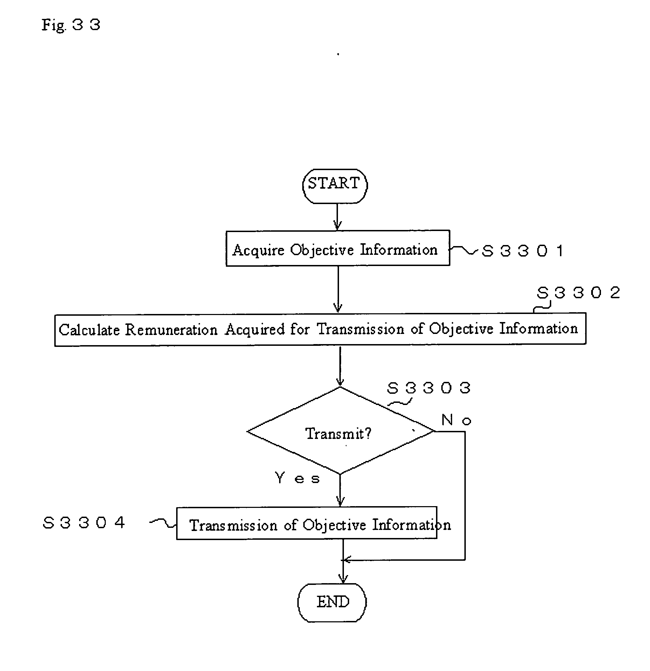

Fig. 33 is a flow chart of the processes of the communication terminal related to the present embodiment. In step S3301, objective information is acquired. After that, in step S3302, remuneration information acquired for transmission of objective information is calculated according to remuneration expectation information received in remuneration expectation information reception means. In step S3303, whether or not to transmit is determined according to the calculated remuneration information. When objective information is determined to be transmitted, it is transmitted in step S3305.

Moreover, there are various timings for processes of the flow chart of Fig. 33. For example, objective information is acquired at passage of predetermined time and remuneration expectation information is received, then, the process of Fig. 33 may be performed. Moreover, when remuneration expectation information is received, the process of Fig. 33 may be performed. Moreover, process of Fig. 33 may be performed by instruction of owner of the communication terminal.

Besides, as described in the first embodiment, a GPS receiver may be used as an example of one method for acquiring current position of the communication terminal. As the other examples of methods, in cases where it is detected that the communication terminal is set to a battery charger, it may be determined that the current position of the communication terminal is its owner's home. In cases where the communication terminal is set in movable body, such as a car, it may acquire the current position from a position sensor of a movable body.

According to the present embodiment, information processing apparatus of the fourth embodiment acquires objective information. Moreover, it becomes possible to avoid inefficient transmission and waste of battery power.

As the eleventh embodiment of the present invention, the communication terminal acquiring objective information without the operation of the owner will be described.

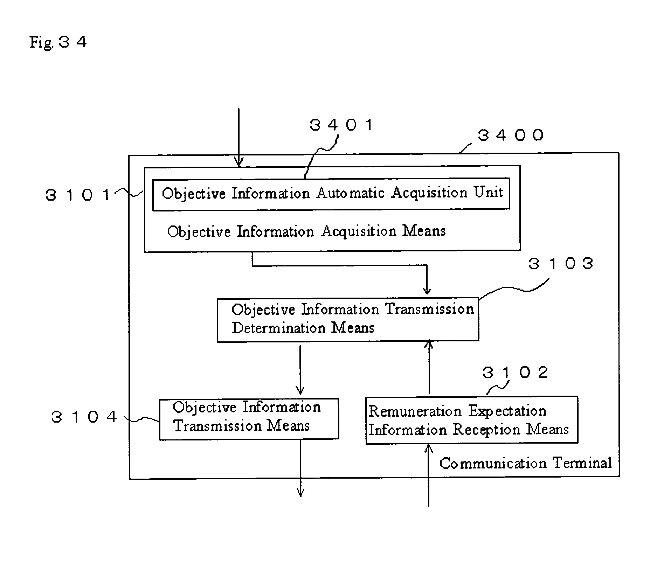

Fig. 34 is a functional block diagram of the communication terminal related to the present embodiment. As becoming clear by comparing Fig. 31, communication terminal 3400 related to the present embodiment has configuration wherein objective information acquisition means 3101 in communication terminal 3100 of the tenth embodiment comprises objective information automatic acquisition unit 3401.

Objective information automatic acquisition unit 3401 acquires the objective information without the owner's operation. Here, "owner" corresponds to the owner of communication terminal 3400.

For example, objective information automatic acquisition unit 3401 acquires objective information at regular time intervals or at achievement of a predetermined condition. As an example of a predetermined condition, transfer of communication terminal 3400 is cited.

According to the present embodiment, objective information is acquired without the owner's operation, thereby, for example, it is able to give high remuneration without owner's awareness. Moreover, in cases where objective information automatic acquisition unit acquires objective information at occurrence of a predetermined condition, by not informing the owner of the predetermined condition, the owner becomes inquisitive about how to acquire high remuneration, so that it is possible to accelerate the collection of objective information.

As the twelfth embodiment of the present invention, communication terminal receiving remuneration information will be described.

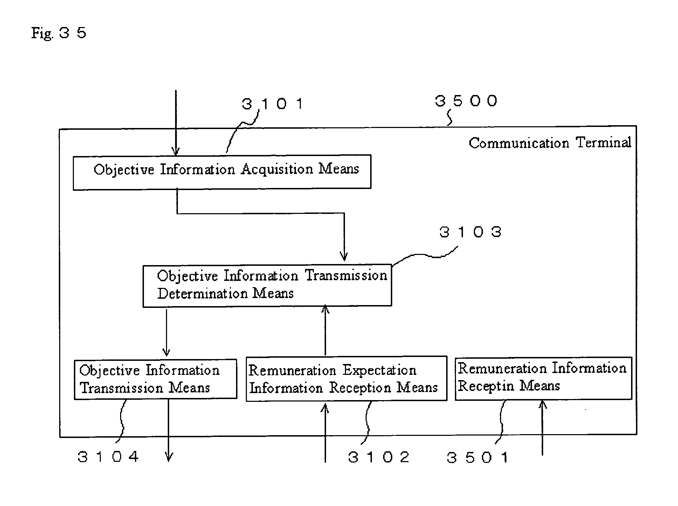

Fig. 35 is a functional block diagram of communication terminal relating to the twelfth embodiment. As is clear by comparing Fig. 31, communication terminal 3500 to the twelfth embodiment has a configuration wherein communication terminal 3100 of the tenth embodiment comprises remuneration information reception means 3501.

Remuneration information reception means 3501 receives remuneration information for objective information transmitted from objective information transmission means 3104. For example, remuneration information transmitted from information processing apparatus described as the eighth embodiment.

In cases where remuneration information reception means 3501 receives remuneration information, for example, when remuneration information indicates points, points are added to the received points. Moreover, the result of the addition may be displayed. Furthermore, remuneration information indicates program, the program may be operated on communication terminal 3500.

According to the present embodiment, the owner of the communication terminal is able to receive remuneration based upon the remuneration information of the communication terminal.

In the thirteenth embodiment of the present invention, the communication terminal requests necessary remuneration expectation information and receives it, and information processing apparatus transmits remuneration expectation information according to the request of the remuneration expectation information transmitted from the communication terminal, as described hereinafter.

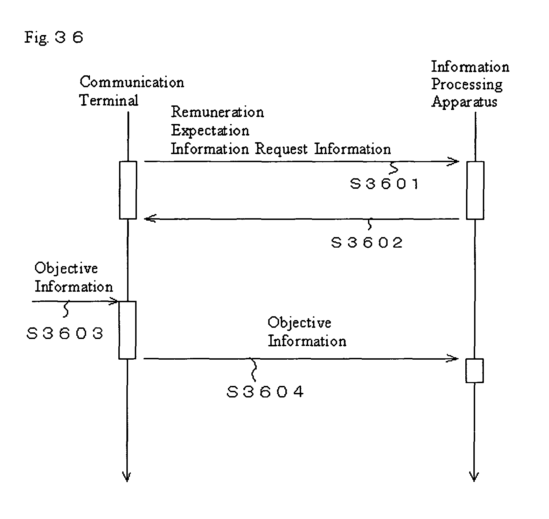

Fig. 36 is a sequential diagram of transmission and reception of communication terminal and information processing apparatus of the present embodiment.

In step S3601, remuneration expectation information request information is transmitted from the communication terminal. This remuneration expectation information request information contains, for example, information relating to time at which communication terminal can acquire objective information and information relating to position in which communication terminal can acquire objective information. In step S3602, information processing apparatus receiving remuneration expectation information request information transmits required remuneration expectation information. Remuneration expectation information transmitted at this point relates to information about time and position included in remuneration expectation information request information. For example, in cases where remuneration expectation information request information includes position, such as the city "Yokohama", remuneration expectation information relating to the city of Yokohama is transmitted.

After that communication terminal receives objective information (step S3603), when it is determined that the objective information is to be transmitted, objective information is transmitted to information processing apparatus (step S3604).

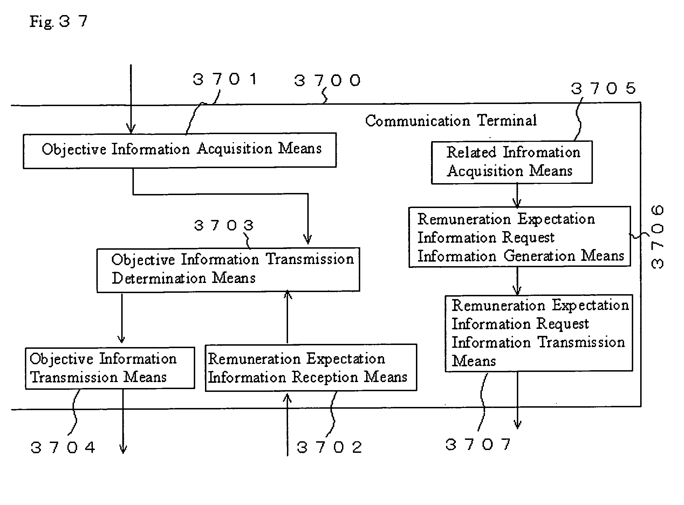

Fig. 37 is a functional block diagram of communication terminal relating to the present embodiment. Communication terminal 3700 comprises objective information acquisition means 3701, remuneration expectation information reception means 3702, objective information transmission determination means 3703, objective information transmission means 3704, related information acquisition means 3705, remuneration expectation information request information generation means 3706, and remuneration expectation information request information transmission means 3707. Moreover, it is possible to implement these means by a program installed in computer.

Objective information acquisition means 3701 acquires objective information. As used herein, objective information corresponds to information which is objective and has the same definition as the first embodiment. Therefore, examples of objective information include temperature, humidity, noise, pollen level, and smoke level etc. as environmental data, moreover, data relating to movable body such as the degree of congestion of a train and the speed of a car running on the road. Besides, objective information may be related to information attribute information.

Remuneration expectation information reception means 3702 receives remuneration expectation information indicating content of remuneration acquired for transmission of objective information. For example, information indicating how many points are given for one transmission of objective information is received.

"Objective information transmission determination means" 3703 determines whether above-mentioned objective information is transmitted based on above-mentioned remuneration expectation information and predetermined standard. Above-mentioned remuneration expectation information corresponds to remuneration expectation information received in remuneration expectation information reception means 3702, "above-mentioned objective information" corresponds to objective information acquired in objective information acquisition means 3701. "Predetermined standard" corresponds to standard, for example, "more than 5 points". According to this standard, in cases where more than 5 points are acquired by transmission of objective information, objective information is transmitted.

Objective information transmission means 3704 transmits above-mentioned objective information in cases where objective information transmission determination means determines to transmit, above-mentioned objective information is transmitted.

Related information acquisition means 3705 acquires related information. As used herein, related information corresponds to spatial and/or temporal information relating to objective information acquired in objective information acquisition means 3701. Objective information acquired in objective information acquisition means 3701 does not correspond to objective information acquired in the past but rather to objective information to be acquired in the future. Spatial information relating to objective information corresponds to information relating to position in which objective information is acquired. For example, it is positional information indicating where objective information is acquired. Temporal information relating to objective information corresponds to information relating to time at which objective information is acquired. For example, it is time information indicating when objective information is acquired.

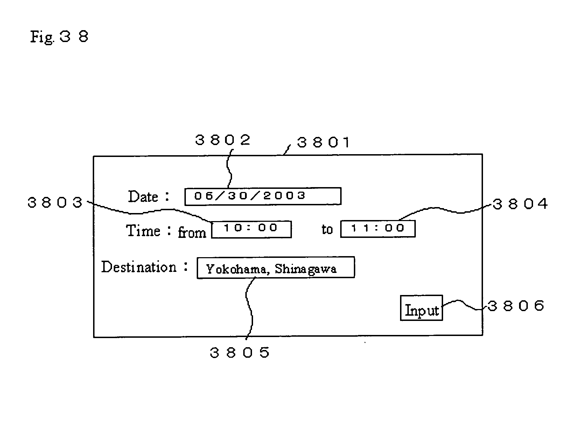

Fig. 38 illustrates display 3801 for acquiring related information. This display comprises field 3802 for input of date, field 3803 and 3804 for input of time, field 3805 for input of destination, and input button 3806. In Fig. 38, an example of input, it is indicated that owner of communication terminal is in the cities of Yokohama and Shinagawa at 10 am to 11 am on June 30, 2003, so that "Yokohama and Shinagawa" as spatial information relating to objective information is acquired, and "at 10 am to 11 am on June 30, 2003" as temporal information relating to objective information is acquired.

Remuneration expectation information request information generation means 3706 generates remuneration expectation information request information. Remuneration expectation information request information corresponds to information requesting transmission of remuneration expectation information related to related information acquired in related information acquisition means 3705. For example, in cases where input illustrated in Fig. 38 is executed and related information is acquired, remuneration expectation information related to position as "Yokohama and Kawasaki", and/or remuneration expectation information related to time as "at 10 am to 11 am on June 30, 2003" are acquired.

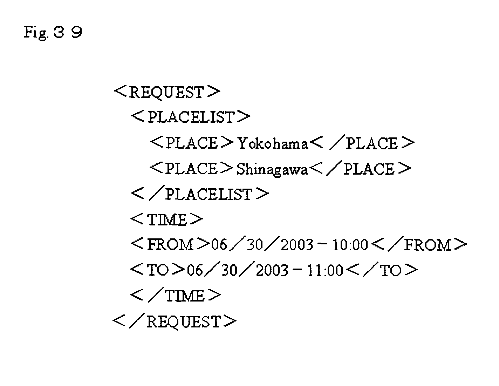

Fig. 39 illustrates remuneration expectation information request information generated from the example of input in Fig. 38. In Fig. 39, remuneration expectation information request information is expressed in XML language.

Remuneration expectation information request information transmission means 3707 transmits remuneration expectation information request information generated in remuneration expectation information request information generation means 3706.

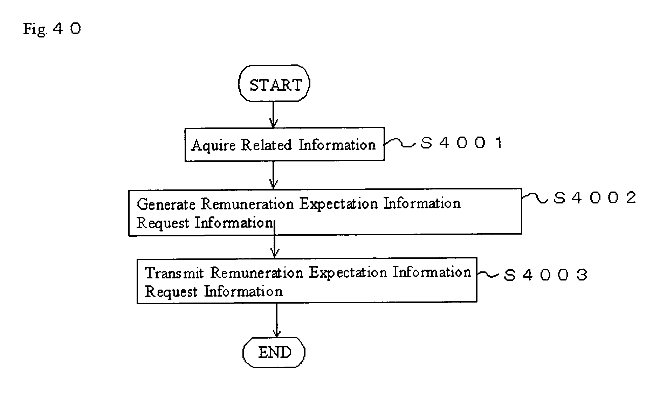

Fig. 40 is a flow chart of the process of the communication terminal. Firstly, related information is acquired in related information acquisition means 3705 (step S4001). Secondly, remuneration expectation information request information is generated in remuneration expectation information request information generation means 3706 (step S4002). Then, remuneration expectation information request information is transmitted by remuneration expectation information request information transmission means 3707.

After the process of the flow chart of Fig. 40, remuneration expectation information in response to remuneration expectation information request information is received by remuneration expectation information reception means 3702. Then, in cases where it is determined that objective information is transmitted by objective information transmission determination means, objective information is transmitted by objective information transmission means 3704.

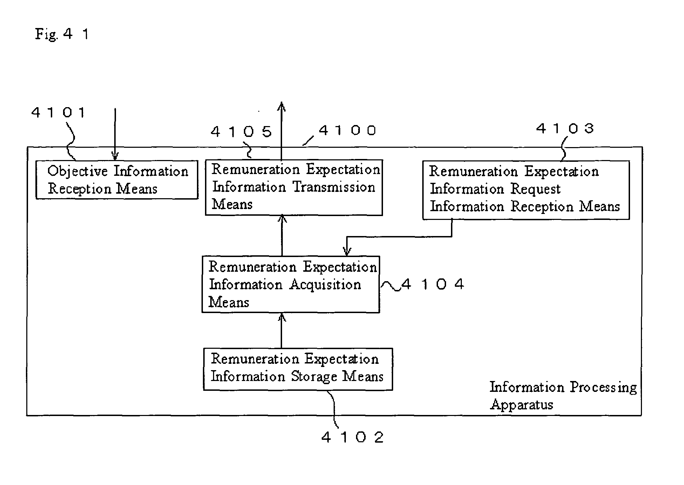

Fig. 41 is a functional block diagram of information processing apparatus relating to the present embodiment. Information processing apparatus 4100 comprises objective information reception means 4101, remuneration expectation information storage means 4102, remuneration expectation information request information reception means 4103, remuneration expectation information acquisition means 4104, and remuneration expectation information transmission means 4105.

Objective information reception means 4101 receives objective information. As described above, objective information may be related to information attribute information. Moreover, objective information reception means 4101 may receive objective information unrelated to information attribute information and may relate it to information attribute information according to information source of objective information.

Remuneration expectation information storage means 4102 stores remuneration expectation information indicating the expected remuneration for objective information to related information. For example, it stores remuneration expectation information in relationship to administrative section, or remuneration expectation information in relationship to a time zone.

Remuneration expectation information request information reception means 4103 receives remuneration expectation information request information requesting transmission of remuneration expectation information related to other information. This remuneration expectation information request information corresponds to information transmitted from remuneration expectation information request information transmission means 3707.

Remuneration expectation information acquisition means 4104 extracts related information included in remuneration expectation information request information received in remuneration expectation information request information reception means 4103, and acquires remuneration expectation information stored in relationship to above-mentioned related information in remuneration expectation information storage means 4102. Above-mentioned related information corresponds to related information extracted from remuneration expectation information request information received in remuneration expectation information request information reception means 4103. For example, in cases where the city of "Yokohama" as related information is included in remuneration expectation information request information, remuneration expectation information stored in relationship to the city of "Yokohama" is acquired from remuneration expectation information storage means 4102.

Remuneration expectation information transmission means 4105 transmits remuneration expectation information acquired in remuneration expectation information storage means 4104. For example, remuneration expectation information is transmitted to communication terminal transmitting remuneration expectation information request information.

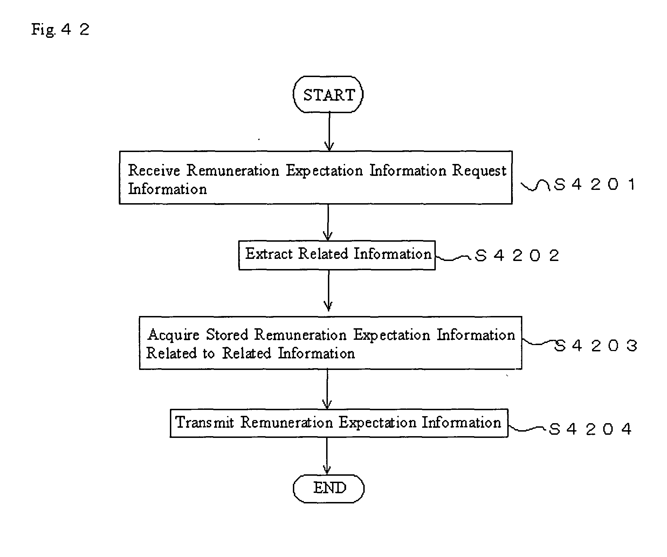

Fig. 42 is a flow chart of the process of information processing apparatus related to the present embodiment.

Firstly, remuneration expectation information request information is received (step S4201) in remuneration expectation information request information reception means 4103. Secondly, related information included in remuneration expectation information request information is extracted (step S4202) in remuneration expectation information acquisition means 4104. In addition, remuneration expectation information stored in relationship to information in remuneration expectation information storage means 4102 (step S4203). Finally, remuneration expectation information is transmitted by remuneration expectation information transmission means 4105 (step S4204).

After that objective information transmitted from communication terminal receiving remuneration expectation information is received in objective information reception means 4101.

According to the present embodiment, the remuneration expectation information is reduced.

For example, assuming that remuneration expectation information is set by every local government in Japan or other countries, size of remuneration expectation information is calculated as followings. For example, because the number of local governments in Japan is about 3,000, 2 bites are required to identify local governments. Therefore, when remuneration expectation information is expressed in 1 bite, the size of remuneration expectation information is about 9,000 bites.

However, according to the present embodiment, for example, in cases where remuneration expectation information request information requests remuneration expectation information in return for objective information acquired in two local governments, the size of remuneration expectation information in return for the remuneration expectation information request information is only 6 bites, so that it is possible to reduce the required cost for transmission and reception of remuneration expectation information .

As the thirteenth embodiment of the present invention, communication terminal acquiring related information from schedule information will be described.

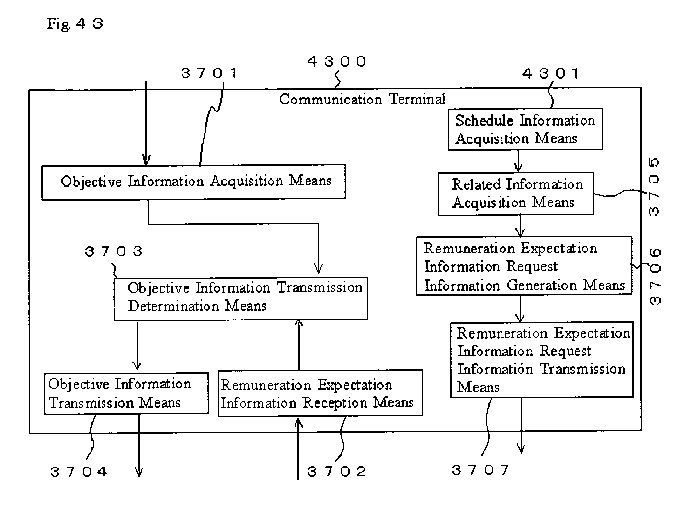

Fig. 43 is a functional block diagram of communication terminal of the present embodiment. As it becomes clear comparing with a functional block diagram illustrated in Fig. 37, communication terminal 4300 relating to the present embodiment has configuration wherein communication terminal of the thirteenth embodiment comprises schedule information acquisition means 4301.

Schedule information acquisition means 4301 acquires schedule information of the owner thereof. Schedule information corresponds to schedule information, for example, when and where owner goes and who he meets etc. Such schedule information may be stored in communication terminal. In this case, schedule information acquisition means acquires stored schedule information. Moreover, schedule information may be stored in external apparatus, for example, the server. In this case, schedule information acquisition means requests to the external apparatus and acquires schedule information.

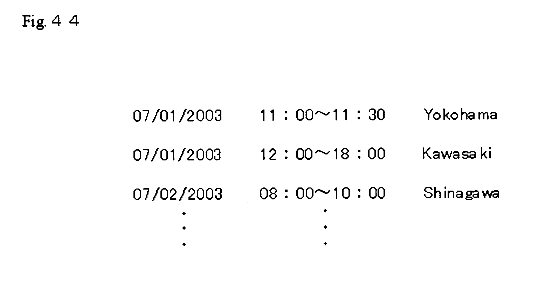

Fig. 44 illustrates an example of schedule information. In this example, schedule information is information wherein date, time zone and position are related to each other.

In the present embodiment, related information acquisition means 3705 acquires related information based on schedule information acquired by schedule information acquisition means 4301.

For example, the location of the owner is determined according to acquisition of current time and reference of schedule information. In cases where current time is 13:00 and schedule information indicates that owner stays at the city of Shinjuku from 12:00 to 14:00, it is determined that he stays at the city of Shinjuku now. As a result of this, "Shinjuku, 13:00" is acquired as related information. Thereby the remuneration expectation information request information requesting remuneration expectation information at 13:00 in the city of Shinjuku is generated and is transmitted.

Moreover, in cases where schedule information about current time is blank, it may be determined that the owner stays at home or at his or her workplace.

Furthermore, related information may be acquired as future schedule information. For example, in cases where current time is 13:00 and schedule information indicates that owner goes the city of Shibuya from 14:00, "Shibuya, 14:00" may be acquired as related information. As a result of this, remuneration expectation information request information requesting remuneration expectation information at 14:00 in the city of Shibuya is generated and is transmitted.

According to the present embodiment, in addition to effect of the thirteenth embodiment, it becomes effective to acquire related information automatically.

The fifteenth embodiment of the present invention wherein communication terminal acquiring related information from transfer history, will be described.

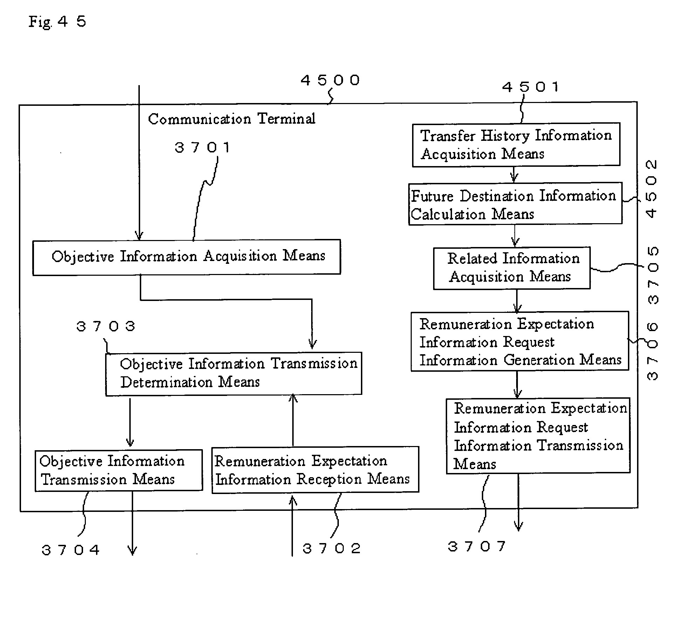

Fig. 45 is a functional block diagram of communication terminal relating to the present embodiment. As it becomes clear by considering a functional block diagram illustrated in Fig. 37, communication terminal 4500 has a configuration wherein communication terminal of the thirteenth embodiment comprises transfer history information acquisition means 4501 and future destination information calculation means 4502.

"Transfer history information acquisition means" 4501 acquires transfer history information relating to transfer history of communication terminal itself.

For example, in cases where a railway ticket using IC card communicating with a ticket examining machine stores boarding history between entrance station and exit station, transfer history is acquired from the railway ticket. Moreover, in cases where transfer history is stored in a server, transfer history is acquired from the server. Moreover, transfer history may include not only positional information but also time information.

Moreover, in car navigation systems etc, the route from current position to destination is calculated by inputting the destination. Consequently, the transfer history information acquisition means may acquire transfer history information from the history by storing calculated route as the history.

Future destination information calculation means 4502 calculates future destination information based on transfer history information acquired in transfer history information acquisition means 4501. Future destination information corresponds to information indicating the place to which it transfers in the future.

For example, in cases where boarding history of the same zone is included in the boarding history between entrance station and exit station many times, it is determined that it is likely to board on the same zone in the future, so that information about the zone is set to future destination information.

Moreover, since future destination information is information relating to a place to which there is likely to be a transfer, it may correspond not only to information about place but also to information about time to go to the place. For example, in cases where information about the boarding zone is acquired from the boarding ticket using an IC card, since it is normally considered that it is likely to board in the morning and the evening, for example, information about the zone around 9:00 am and 6:00 pm is set to future destination information. In cases where, for example, owner of boarding ticket is a primary school student, the time is set to around 8:00 am and 3:00 pm.

In the present embodiment, related information acquisition means 3705 acquires related information based on future destination information calculated by future destination information calculation means 4502.

For example, in cases where information indicating place such as the cities of Yokohama and Shinagawa, related information including Yokohama and Shinagawa is acquired.

According to the present embodiment, in addition to effect of the thirteenth embodiment, it becomes effective to acquire related information automatically.

As the sixteenth embodiment of the present invention, the communication terminal stores received remuneration expectation information will be described.

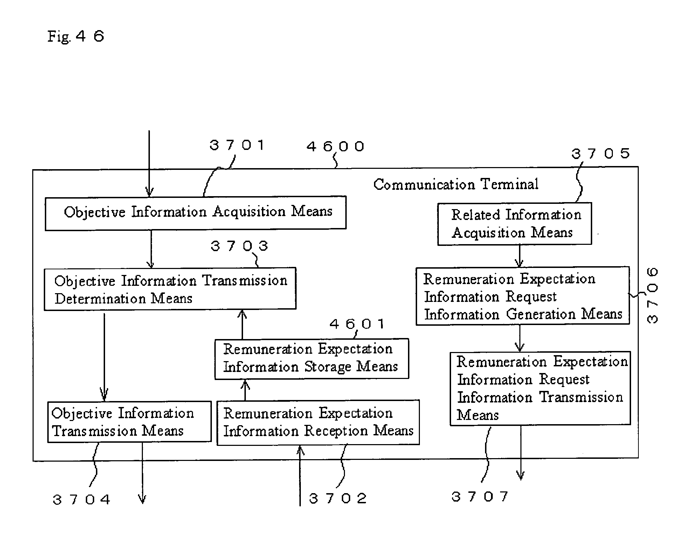

Fig. 46 illustrates a functional block diagram of communication terminal relating to the present embodiment. As it becomes clear comparing with a functional block diagram illustrated in Fig. 37, the communication terminal 4600 of the present embodiment has a configuration wherein the communication terminal of the thirteenth embodiment comprises remuneration expectation information storage means 4601.

Remuneration expectation information storage means 4601 stores remuneration expectation information received in remuneration expectation information reception means 3702 according to remuneration expectation information request information transmitted in remuneration expectation information request information transmission means 3707 in relationship to information included in above-mentioned remuneration expectation information request information.

For example, in cases where remuneration expectation information request information transmission means 3707 transmits remuneration expectation information request information requesting remuneration expectation information remuneration expectation information request information of the city of Yokohama, remuneration expectation information acquired in return for transmission of the remuneration expectation information request information is stored in relationship to the city of Yokohama. Note that, for example, storage is executed on memory including non-volatile memory and magnetic disk etc.

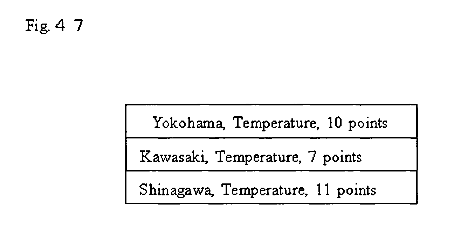

Fig. 47 illustrates remuneration expectation information stored by the remuneration expectation information storage means. In this case, the first place name of each line is set to information related to remuneration expectation information.

In the present embodiment, since remuneration expectation information is stored, it is not necessary to receive remuneration expectation constantly, thereby it becomes possible to reduce communication cost.

As the seventeenth embodiment of the present invention, the communication terminal deleting remuneration expectation information as needed will be described.

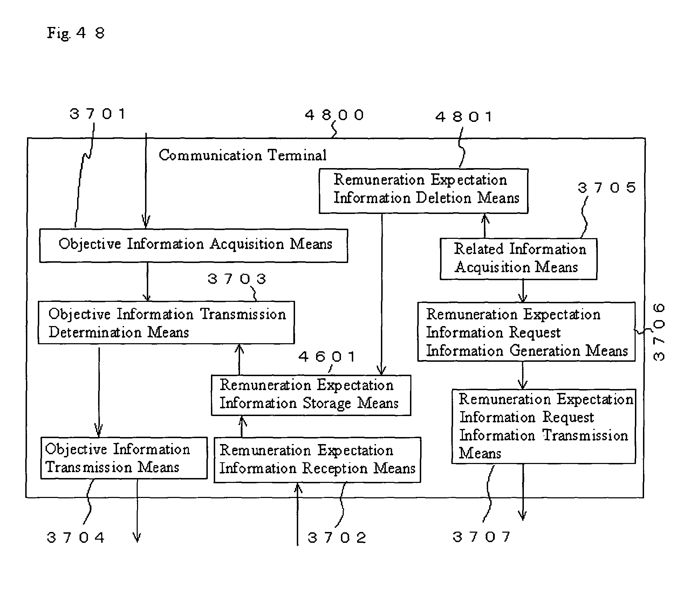

Fig. 48 is a functional block diagram of the communication terminal of the present embodiment. As it becomes clear by considering with a functional block diagram illustrated in Fig. 46, communication terminal 4800 of the present embodiment has a configuration wherein communication terminal of the sixteenth embodiment comprises remuneration expectation information deletion means 4801.

Remuneration expectation information deletion means 4801 deletes remuneration expectation information stored in remuneration expectation information storage means 4601 and unrelated to information acquired in related information acquisition means 3705.

For example, in cases where remuneration expectation information is stored in remuneration expectation information storage means 4601 as shown in Fig. 47, when related information acquired in related information acquisition means 3705 is only about the cities of Kawasaki and Shinagawa, remuneration expectation information related to the city of Yokohama is deleted.

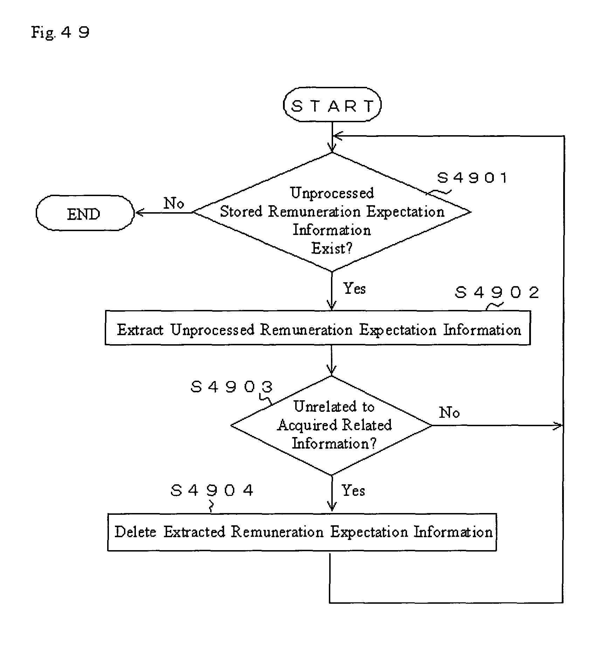

Fig. 49 is a flow chart of the unique process of communication terminal relating to the present embodiment. Note that, for example, this process is executed every time related information acquisition means 3705 acquires related information.

In step S4901, it is determined whether remuneration expectation information stored in remuneration expectation information storage means 4601 and unprocessed exists. If so, it will go on to step S4902. If not, it will end the process.

In step S4902, one of unprocessed remuneration expectation information is extracted.

In step S4903, it is determined whether remuneration expectation information extracted in step S4902 is related to information acquired in related information acquisition means 3705. If so, it will be back to step S4901. If not, it will go on to step S4904.

In step S4904, remuneration expectation information extracted in step S4902 is deleted.

According to the present embodiment, it becomes possible to delete remuneration expectation information stored in remuneration expectation information storage means and not referenced, so that it is able to reduce the capacity of the memory.

As described hereinbefore, according to the present invention, because the communication terminal automatically measures environmental data etc. and transmits the same, a user can acquire remuneration without bothersome operation, thereby it becomes possible to use various service functions of this communication terminal.

Moreover, information processing apparatus such as the server receives environmental data etc. at the locations of each communication terminal and automatically gives remuneration information, thereby the service provider as administrator of the server is able to acquire environmental data in various locations easily without setting measuring devices for measurement of environmental data at various locations.

## Claims

1. A communication terminal comprising;
an objective information acquisition means acquiring objective information,
an objective information transmission means transmitting said objective information;
a remuneration information reception means receiving remuneration information related to remuneration in compensation for said transmitted remuneration information.

2. The communication terminal of claim 1 wherein said objective information which is environmental information and by said objective information acquisition means comprising a function to measure said environmental information.

3. The communication terminal of any one of claims 1 or 2 comprising functional control means controlling usage of functions of communication terminal concerned based on said received remuneration information.

4. The communication terminal of claim 3 wherein said functional control means removing restriction according to content of said remuneration information in cases where usage of functions in the communication terminal concerned are restricted.

5. The communication terminal of claim 4 wherein said functional control means removes restriction on the duration of transmission by said objective information transmission means.

6. The communication terminal of claim 4 wherein said functional control means removes restriction on specific function.

7. The communication terminal of any of claims 1 to 6 further comprising current position detection means detecting current position, wherein said objective information transmission means transmits current position data relating to said current position,

8. The communication terminal of claim 7 further comprising data storage means relating said objective information, said current positional data and measurement time for measuring said current positional data, and storing them, and wherein said objective information transmission means transmits data stored in said data storage unit at arbitrary or predetermined time.

9. The communication terminal of any of claims 1 to 8 further comprising:
a remuneration expectation information reception means receiving remuneration information indicating content of acquired remuneration according to transmission of said objective information; and
an objective information transmission determination means determining whether said objective information is to be transmitted based on said remuneration expectation information and a predetermined standard.

10. An information processing apparatus comprising:
an objective information reception means receiving objective information,
a remuneration calculation means calculating remuneration according to said objective information: and
a remuneration information transmission means transmitting remuneration information related to said remuneration.

11. The information processing apparatus of claim 10 further comprising a remuneration expectation information transmission means transmitting remuneration expectation information indicating content of remuneration according to said objective information.

12. The information processing apparatus of claim 11 wherein said remuneration calculation means transforms said remuneration expectation information according to volume of said objective information received from said communication terminal.

13. An information processing apparatus comprising:
an objective information reception means receiving objective information related to information attribute information indicating classes of information;
a remuneration expectation information storage means storing remuneration expectation information wherein information indicating content of remuneration given to information source of objective information received by objective information reception means is related to information attribute information related to the objective information;
a remuneration expectation information transmission means transmitting remuneration expectation information stored in remuneration expectation information storage means to the information source;
an objective information storage means relating objective information received in the objective information storage means to the information attribute information and storing them; and
an objective information reference means for reference of objective information stored in said objective information storage means.

14. The information processing apparatus of claim 13 further comprising remuneration expectation information updating means updating remuneration expectation information stored in remuneration expectation information storage means according to information attribute information related to objective information referenced by objective information reference means..

15. The information processing apparatus of claim 13 further comprising remuneration expectation information updating means updating remuneration expectation information stored in remuneration expectation information storage means according to time.

16. The information processing apparatus of claim 13 further comprising remuneration calculation means calculating remuneration information indicating given remuneration according to information attribute information related to objective information transmitted from an information source based on said remuneration expectation information.

17. The information processing apparatus of claim 16 further comprising remuneration information transmission means transmitting remuneration information calculated by said remuneration calculation means to said information source.

18. The information processing apparatus according to claim 14 or 15 wherein:
said objective information reception means is related to information source attribute information indicating attribution of information source;
said remuneration expectation information storage means stores remuneration expectation information related to said information source attribute information; and
said remuneration expectation information updating means updating remuneration expectation information stored in said remuneration expectation information storage means according to said information source attribute information.

19. A communication terminal comprising:
an objective information acquisition means acquiring objective information;
a remuneration expectation information reception means receiving remuneration expectation information;
an objective information transmission determination means determining whether or not said objective information is to be transmitted based on the result calculated according to said remuneration expectation information; and
an objective information transmission means transmitting said objective information in cases where it is determined to be transmitted by said objective information determination means.

20. The communication terminal of claim 19 wherein said objective information acquisition means comprises objective information automatic acquisition unit acquiring said objective information without user's operation.

21. The communication terminal of claim 19 or 20 further comprising remuneration information reception means receiving remuneration information in return for objective information transmitted by said objective information transmission means.

22. A communication terminal comprising:
objective information acquisition means acquiring objective information;
remuneration expectation information reception means receiving remuneration expectation information indicating content of remuneration acquired in return for transmission of objective information;
objective information transmission determination means determining whether said objective information is transmitted based on said remuneration expectation information and on predetermined standard;
objective information transmission means transmitting said objective information in cases where it is determined to be transmitted;
related information acquisition means acquiring related information which is spatial and/or temporal information relating to objective information acquired in said objective information acquisition means;
remuneration expectation information request information generation means generating remuneration expectation information request information requesting transmission of remuneration expectation information related to related information acquired in said related information acquisition means; and
remuneration expectation information request information transmission means transmitting remuneration expectation information request information generated in said remuneration expectation information request information generation means.

23. The communication terminal of claim 22 further comprising schedule information acquisition means acquiring a schedule of a user; and
wherein said related information acquisition means acquires related information based on schedule information acquired schedule information acquisition means.

24. The communication terminal of claim 22 or 23 further comprising:
transfer history information acquisition means acquiring transfer history information relating to its transfer history;
future destination information calculation means calculating future destination information relating to places which can be destined based on transfer history information acquired in said transfer history information acquisition means; and
wherein said related information acquisition means calculated by said future destination information calculation means acquires related information based on future destination information.

25. The communication terminal of any of claims 22 to 24 further comprising remuneration expectation information storage means storing remuneration expectation information received in remuneration expectation information reception means according to remuneration expectation information request information transmitted by said remuneration expectation information request information transmission means in relationship to related information included in said remuneration expectation information request information.

26. The communication terminal of claim 25, wherein the remuneration expectation information is stored in said remuneration expectation information storage means, and further comprising remuneration expectation information deletion means deleting remuneration expectation information unrelated to information acquired by said related information acquisition means.

27. The communication terminal comprising:
objective information reception means receiving objective information;
remuneration expectation storage means storing remuneration expectation information indicating content of remuneration in return for objective information related to related information;
remuneration expectation information request information reception means receiving remuneration expectation information request information requesting transmission of remuneration expectation information related to related information;
remuneration expectation information acquisition means extracting related information included in remuneration expectation information request information received in said remuneration expectation information request information reception means, acquiring remuneration expectation information related to said related information stored in said remuneration expectation information storage means; and
remuneration expectation information transmission means transmitting remuneration expectation information acquired in said remuneration expectation information acquisition means.
